# EUROPEAN PATENT APPLICATION

(11) **EP 3 913 766 A1**
(43) Date of publication of application: **24.11.2021**
(21) Application number: 21174973.4
(22) Date of filing: 20.05.2021
(51) Int. Cl.: H02J 15/00

(54) **ELECTRIC POWER CONTROL DEVICE AND ELECTRIC POWER CONTROL METHOD**

(30) Priority: 21.05.2020 JP 2020088801
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: Kusunoki, Kiyoshi, Kanagawa, 212-0013 (JP); Hachiya, Hideyuki, Kanagawa, 212-0013 (JP); Fujita, Takashi, Kanagawa, 212-0013 (JP); Matsumura, Akiko, Kanagawa, 212-0013 (JP)
(74) Representative: Hoffmann Eitle

(57) **Abstract**

According to one embodiment, an electric power control device (100) includes effective power command value calculation means (21X) for receiving an output/input command value and a charge/discharge command value, and calculating effective power command values; power conversion control command value calculation means (31) for calculating a power conversion control command value to be provided to power conversion means (8), using one of the effective power command values; and governing control command value calculation means (41) for calculating a governing control command value to be provided to governing means (10), using one of the effective power command values which differs from the effective power command value used for calculation of the power conversion control command value.

## Description

Embodiments relate generally to an electric power control device and an electric power control method.

Frequency adjustment of an electric power system is performed mainly by output control of thermal power plants and hydraulic power plants. The output of power plants utilizing renewable energy such as solar power and wind power greatly fluctuates in short cycles in accordance with changes in the natural environment. To suppress the frequency fluctuation due to the output fluctuation in short cycles, in addition to the frequency adjustment by thermal power plants and hydraulic power plants, frequency adjustment by rechargeable battery systems is being put to practical use. In the US, rechargeable battery systems that perform charges and discharges in accordance with charge/discharge commands from the electric power system operator have been introduced, and are playing a part in frequency adjustment.

Conventionally, pumped-storage power plants have been mainly used for adjustment for power consumption that changes in relatively long cycles. However, in accordance with the increase in the number of power plants that utilize renewable energy, pumped-storage power plants will be required to have not only a long-cycle adjustment function, but also a short-cycle and high-speed adjustment function, such as a rechargeable battery system.

The pumped-storage power plant is a system that transfers electric power to hydraulic potential energy and generates electric power when necessary, and can be used in a similar manner to the rechargeable battery, which performs charging and discharging. During generating operation, the pumped-storage power plant controls power output in accordance with the frequency deviation between a measured system frequency and a reference frequency, and performs frequency adjustment of the electric power system. Control of power output is performed by controlling the guide vane opening. However, a fixed-speed pumped-storage power plant cannot adjust the rotation speed and thus cannot control the input during pumping operation, and consequently cannot perform frequency adjustment. In contrast, an adjustable-speed pumped-storage power plant can adjust the rotation speed during pumping operation, and thus can control the pumping input in accordance with the frequency deviation between the measured electric power system frequency and the reference frequency and perform frequency adjustment of the electric power system. The adjustable-speed pumped-storage power plant, which operates as described above, can perform both control of power output (corresponding to discharging) and control of pumping input (corresponding to charging).

However, to perform switching from the pumping operation (corresponding to charging) to the generating operation (corresponding to discharging) or switching from the generating operation (corresponding to discharging) to the pumping operation (corresponding to charging), the rotating direction needs to be reversed, and it is necessary to stop and then restart the plant. Therefore, unlike the rechargeable battery, the adjustable-speed pumped-storage power plant cannot perform, within a short period, switching from the pumping operation (corresponding to charging) to the generating operation (corresponding to discharging) or switching from the generating operation (corresponding to discharging) to the pumping operation (corresponding to charging) in accordance with charge/discharge command values.

Accordingly, it is desired to present a control technology that enables a pumped-storage power plant, a power plant, a pumping plant, or a plant capable of an adjustable-speed operation utilizing energy of a substance other than water to perform an operation according to charge/discharge command values, that can reduce unnecessary operations of flow volume control means, fluid flow alignment means, or substance amount control means, and that can lengthen the life of the flow volume control means, fluid flow alignment means, or substance amount control means.

According to one embodiment, there is provided an electric power control device applicable to a plant including a prime mover configured to convert fluid energy into rotational energy or a fluid machine configured to convert rotational energy into fluid energy, a rotary electrical machine mechanically connected to the prime mover and configured to convert rotational energy of the prime mover into electrical energy or a rotary electrical machine connected to the fluid machine and configured to convert electrical energy into rotational energy, governing means for adjusting an opening of flow volume control means or fluid flow alignment means of the prime mover, and power conversion means for controlling electrical parameters of the rotary electrical machine and controlling an effective power or rotation speed of the rotary electrical machine. The electric power control device comprises: effective power command value calculation means for receiving an output command value or input command value and a charge/discharge command value, and calculating a plurality of effective power command values using the received output command value or input command value and the received charge/discharge command value; power conversion control command value calculation means for calculating a power conversion control command value to be provided to the power conversion means, using one of the effective power command values calculated by the effective power command value calculation means; and governing control command value calculation means for calculating a governing control command value to be provided to the governing means, using one of the effective power command values calculated by the effective power command value calculation means which differs from the effective power command value used for calculation of the power conversion control command value.

The invention can be more fully understood from the following detailed description when taken in conjunction with the accompanying drawings, in which:
FIG. 1 shows an example of the configuration of a pumped-storage power plant during generating operation common to the embodiments;
FIG. 2 is a block diagram showing an example of the functional configuration of an effective power control unit 20 according to a first embodiment;
FIG. 3 briefly shows examples of waveforms of signals in respective units in an effective power command value calculation unit 21X shown in FIG. 2;
FIG. 4A is a flowchart showing an example of processing for generating an effective power command value common to the embodiments;
FIG. 4B is a flowchart showing an example of processing for generating a secondary current command value common to the embodiments;
FIG. 4C is a flowchart showing an example of processing for generating a guide vane opening command value common to the embodiments;
FIG. 5 is a flowchart showing an example of the procedure for generating a first effective power command value common to the embodiments;
FIG. 6 is a flowchart showing an example of the procedure for generating a second effective power command value common to the embodiments;
FIG. 7 is a flowchart showing an example of the procedure for generating a third effective power command value according to the first embodiment;
FIG. 8 is a block diagram showing an example of the functional configuration of an effective power control unit 20 according to a second embodiment;
FIG. 9 briefly shows examples of waveforms of signals in respective units in an effective power command value calculation unit 21X shown in FIG. 8;
FIG. 10 is a flowchart showing an example of the procedure for generating a third effective power command value according to the second embodiment;
FIG. 11 is a block diagram showing an example of the functional configuration of an effective power control unit 20 according to a third embodiment;
FIG. 12 briefly shows examples of waveforms of signals in respective units in an effective power command value calculation unit 21X shown in FIG. 11;
FIG. 13 is a flowchart showing an example of the procedure for generating a third effective power command value according to the third embodiment;
FIG. 14A is a block diagram showing an example of the functional configuration of an effective power control unit 20 according to a first example of a fourth embodiment;
FIG. 14B is a block diagram showing an example of the functional configuration of an effective power control unit 20 according to a second example of the fourth embodiment;
FIG. 15A briefly shows examples of waveforms of signals in respective units in an effective power command value calculation unit 21X shown in FIG. 14A;
FIG. 15B briefly shows examples of waveforms of signals in respective units in an effective power command value calculation unit 21X shown in FIG. 14B;
FIG. 16A is a flowchart showing an example of the procedure for generating a third effective power command value according to the first example of the fourth embodiment;
FIG. 16B is a flowchart showing an example of the procedure for generating a third effective power command value according to the second example of the fourth embodiment;
FIG. 17A is a block diagram showing an example of the functional configuration of an effective power control unit 20 according to a first example of a fifth embodiment;
FIG. 17B is a block diagram showing an example of the functional configuration of an effective power control unit 20 according to a second example of the fifth embodiment;
FIG. 17C is a block diagram showing an example of the functional configuration of an effective power control unit 20 according to a third example of the fifth embodiment;
FIG. 17D is a block diagram showing an example of the functional configuration of an effective power control unit 20 according to a fourth example of the fifth embodiment;
FIG. 17E is a block diagram showing an example of the functional configuration of an effective power control unit 20 according to a fifth example of the fifth embodiment;
FIG. 17F is a block diagram showing an example of the functional configuration of an effective power control unit 20 according to a sixth example of the fifth embodiment;
FIG. 17G is a block diagram showing an example of the functional configuration of an effective power control unit 20 according to a seventh example of the fifth embodiment;
FIG. 17H is a block diagram showing an example of the functional configuration of an effective power control unit 20 according to an eighth example of the fifth embodiment;
FIG. 17I is a block diagram showing an example of the functional configuration of an effective power control unit 20 according to a ninth example of the fifth embodiment;
FIG. 17J is a block diagram showing an example of the functional configuration of an effective power control unit 20 according to a tenth example of the fifth embodiment;
FIG. 17K is a block diagram showing an example of the functional configuration of an effective power control unit 20 according to an eleventh example of the fifth embodiment;
FIG. 18A briefly shows examples of waveforms of signals in respective units in an effective power command value calculation unit 21X shown in FIG. 17A;
FIG. 18B briefly shows examples of waveforms of signals in respective units in an effective power command value calculation unit 21X shown in FIG. 17B;
FIG. 18C briefly shows examples of waveforms of signals in respective units in an effective power command value calculation unit 21X shown in FIG. 17C;
FIG. 18D briefly shows examples of waveforms of signals in respective units in an effective power command value calculation unit 21X shown in FIG. 17D;
FIG. 18E briefly shows examples of waveforms of signals in respective units in an effective power command value calculation unit 21X shown in FIG. 17E;
FIG. 18F briefly shows examples of waveforms of signals in respective units in an effective power command value calculation unit 21X shown in FIG. 17F;
FIG. 18G briefly shows examples of waveforms of signals in respective units in an effective power command value calculation unit 21X shown in FIG. 17G;
FIG. 18H briefly shows examples of waveforms of signals in respective units in an effective power command value calculation unit 21X shown in FIG. 17H;
FIG. 18I briefly shows examples of waveforms of signals in respective units in an effective power command value calculation unit 21X shown in FIG. 17I;
FIG. 18J briefly shows examples of waveforms of signals in respective units in an effective power command value calculation unit 21X shown in FIG. 17J;
FIG. 18K briefly shows examples of waveforms of signals in respective units in an effective power command value calculation unit 21X shown in FIG. 17K;
FIG. 19A is a flowchart showing an example of the procedure for generating a third effective power command value according to the first example of the fifth embodiment;
FIG. 19B is a flowchart showing an example of the procedure for generating a third effective power command value according to the second example of the fifth embodiment;
FIG. 19C is a flowchart showing an example of the procedure for generating a third effective power command value according to the third example of the fifth embodiment;
FIG. 19D is a flowchart showing an example of the procedure for generating a third effective power command value according to the fourth example of the fifth embodiment;
FIG. 19E is a flowchart showing an example of the procedure for generating a third effective power command value according to the fifth example of the fifth embodiment;
FIG. 19F is a flowchart showing an example of the procedure for generating a third effective power command value according to the sixth example of the fifth embodiment;
FIG. 19G is a flowchart showing an example of the procedure for generating a third effective power command value according to the seventh example of the fifth embodiment;
FIG. 19H is a flowchart showing an example of the procedure for generating a third effective power command value according to the eighth example of the fifth embodiment;
FIG. 19I is a flowchart showing an example of the procedure for generating a third effective power command value according to the ninth example of the fifth embodiment;
FIG. 19J is a flowchart showing an example of the procedure for generating a third effective power command value according to the tenth example of the fifth embodiment;
FIG. 19K is a flowchart showing an example of the procedure for generating a third effective power command value according to the eleventh example of the fifth embodiment;
FIG. 20 shows an example of the configuration of the pumped-storage power plant during pumping operation in FIG. 1 in which control is performed through an input power of an "input command value", not an "output command value";
FIG. 21 shows an example of the configuration of the pumped-storage power plant during generating operation in FIG. 1 in which power conversion means is connected to the "primary side", "stator side", or "armature side", not the "secondary side", of a generator motor; and
FIG. 22 shows an example of the configuration of the pumped-storage power plant during pumping operation in FIG. 20 in which power conversion means is connected to the "primary side", "stator side", or "armature side", not the "secondary side", of a generator motor.

Hereinafter, embodiments of the present invention will be described with reference to the accompanying drawings.

### [First Embodiment]

First, a first embodiment will be described.

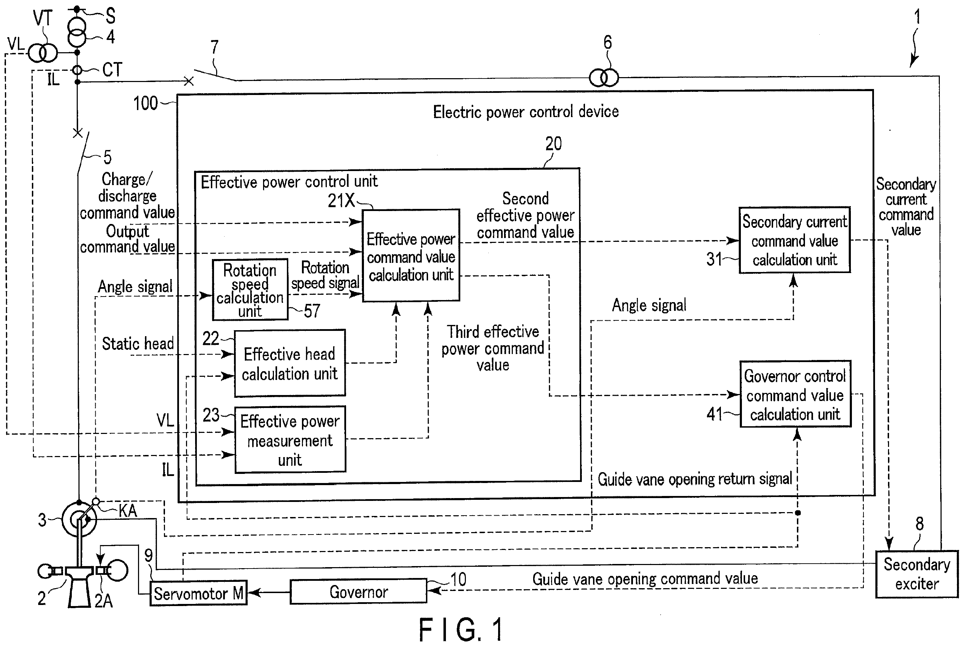

FIG. 1 shows an example of the configuration of a pumped-storage power plant during generating operation according to the first embodiment. The pumped-storage power plant is a plant that can perform both a power generating operation and a pumping operation; however, in the present embodiment, the configuration and operation relating to the power generating operation will be mainly described.

A pumped-storage power plant 1 shown in FIG. 1 is, for example, an adjustable-speed pumped-storage power plant of a secondary excitation type, which has a speed control function and is capable of controlling both pumping input power and generating output power. The pumped-storage power plant 1 may be replaced in practice with an adjustable-speed hydraulic power plant with no pumping function. Alternatively, the pumped-storage power plant 1 may be replaced in practice with an adjustable-speed pumped-storage power plant to which a power converter is connected on a primary side, stator side, or armature side of the generator motor. Alternatively, the pumped-storage power plant 1 may be replaced in practice with an adjustable-speed power plant to which a power converter is connected on a primary side, stator side, or armature side of the generator.

As basic components, the pumped-storage power plant 1 includes devices such as a pump turbine 2, a generator motor (rotary electrical machine) 3, a main transformer 4 electrically connected to a grid system S, a parallel circuit breaker 5, an excitation transformer 6, an excitation circuit breaker 7, a secondary exciter (power conversion means) 8, a servomotor 9, a governor (governing means) 10, a rotation angle detector KA, an instrument transformer VT, and a current transformer CT.

The pump turbine (prime mover, fluid machine) 2 includes a water turbine function and a pump function. The pump turbine 2 converts hydraulic energy into rotational energy when operating as a prime mover (water turbine) and converts rotational energy into hydraulic energy when operating as a fluid machine (pump). The generator motor (rotary electrical machine) 3 is mechanically connected to the pump turbine 2, and converts rotational energy of the pump turbine 2 into electrical energy and outputs the electrical energy when operating as a generator, and converts electrical energy into rotational energy and outputs the rotational energy when operating as a motor.

In addition, the pump turbine 2 includes an opening-adjustable guide vane 2A. The guide vane 2A, the servomotor 9, and the governor 10 constitute flow adjustment means for adjusting the flow of water that flows into the pump turbine 2. The governor 10 includes an actuator which drives the servomotor 9 for moving the guide vane 2A, and a converter coil which activates the actuator in accordance with a guide vane opening command value. Note that the guide vane opening command value indicates an amount of "change" of the opening of the guide vane 2A (instructing that, for example, the opening is to be increased by XX% or decreased by YY%).

During power generating operation, the flow quantity is adjusted by opening of the guide vane 2A. However, during pumping operation, the opening of the guide vane 2A is adjusted for better efficiency. At this time, the guide vane 2A, the servomotor 9, and the governor 10 constitute flow alignment means, not the flow quantity adjustment means.

The secondary exciter (power conversion means) 8 is a power converter that controls secondary current of the generator motor 3 and controls the output (effective power) or rotation speed of the generator motor 3.

The pumped-storage power plant 1 is also provided with an electric power control device 100. The electric power control device 100 provides the secondary exciter 8 with a secondary current command value, and provides the governor 10 with a governing control command value, i.e., a guide vane opening command value and/or an opening/closing command for the guide vane 2A. The electric power control device 100 includes various control functions, such as an effective power control unit 20, a secondary current command value calculation unit (power conversion control command value calculation means) 31, and a governor control command value calculation unit (governing control command value calculation means) 41. Those control functions are implemented as a program (software) executed by a computer, for example.

The effective power control unit 20 includes an effective power command value calculation unit (effective power command value calculation means) 21X, an effective head calculation unit 22, and an effective power measurement unit 23.

The effective power command value calculation unit 21X receives an output command value (command value of power output) and a charge/discharge command value (command value of charging or discharging), which are supplied to the electric power control device 100 from a host controller or the like, calculates a first effective power command value using the received values, and further calculates and outputs a second effective power command value and a third effective power command value. The output command value and the charge/discharge command value may be separately sent from different control means or may be sent from the same control means.

The effective power command value calculation unit 21X supplies the second effective power command value to the secondary current command value calculation unit 31 and supplies the third effective power command value to the governor control command value calculation unit 41.

The effective head calculation unit 22 receives a static head supplied from a host controller or the like and a guide vane opening return signal supplied from the servomotor 9, calculates an effective head (effective head calculation value) using the received static head and guide vane opening return signal, and outputs the effective head. The method of calculating the effective head is not limited to this. For example, the effective head may be calculated by another calculation method which does not use a guide vane opening return signal.

The effective power measurement unit 23 receives a voltage VL and a current IL supplied from the instrument transformer VT and the current transformer CT, respectively, calculates an effective power measurement value using the voltage VL and the current IL, and outputs the effective power measurement value.

The secondary current command value calculation unit (power conversion control command value calculation means) 31 calculates a secondary current command value (power conversion control command value) to be provided to the secondary exciter (power conversion means) 8, using the second effective power command value supplied from the effective power command value calculation unit 21X and an angle signal supplied from the rotation angle detector KA, and outputs the secondary current command value.

The governor control command value calculation unit (governing control command value calculation means) 41 calculates a guide vane opening command value to be provided to the governor (governing means) 10, using the third effective power command value supplied from the effective power command value calculation unit 21X and a guide vane opening return signal supplied from the servomotor 9, and outputs the guide vane opening command value.

The electric power control device 100 may include an interface device that receives a charge/discharge command value supplied from a host controller or the like (such as a controller for suppressing a frequency variation, which is managed by a system management company), adjusts the charge/discharge command value to a value suitable for processing at the effective power command value calculation unit 21X in the effective power control unit 20, as necessary, and outputs the adjusted value.

The electric power control device 100 may further include an interface device that receives an output command value supplied from a host controller or the like (such as a controller for controlling power output, which is managed by a power company), adjusts the output command value to a value suitable for processing at the effective power command value calculation unit 21X in the effective power control unit 20, as necessary, and outputs the adjusted value.

The electric power control device 100 may further include an interface device that receives a secondary current command value output from the secondary current command value calculation unit 31, adjusts the secondary current command value to a value suitable for processing at the secondary exciter 8, as necessary, and outputs the adjusted value.

The electric power control device 100 may further include an interface device that receives a guide vane opening command value output from the governor control command value calculation unit 41, adjusts the guide vane opening command value to a value suitable for processing at the governor 10, as necessary, and outputs the adjusted value.

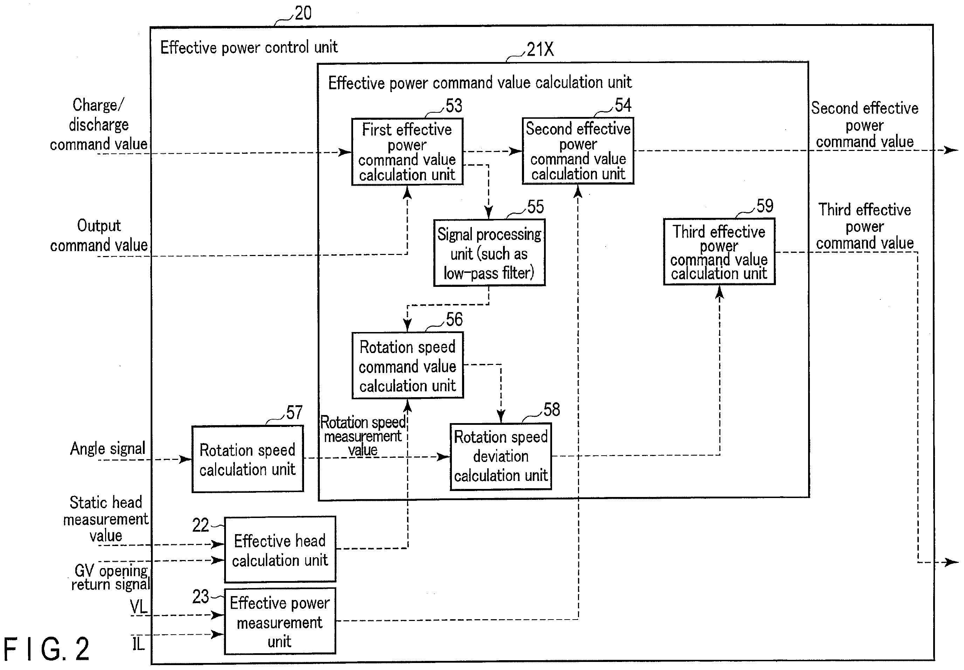

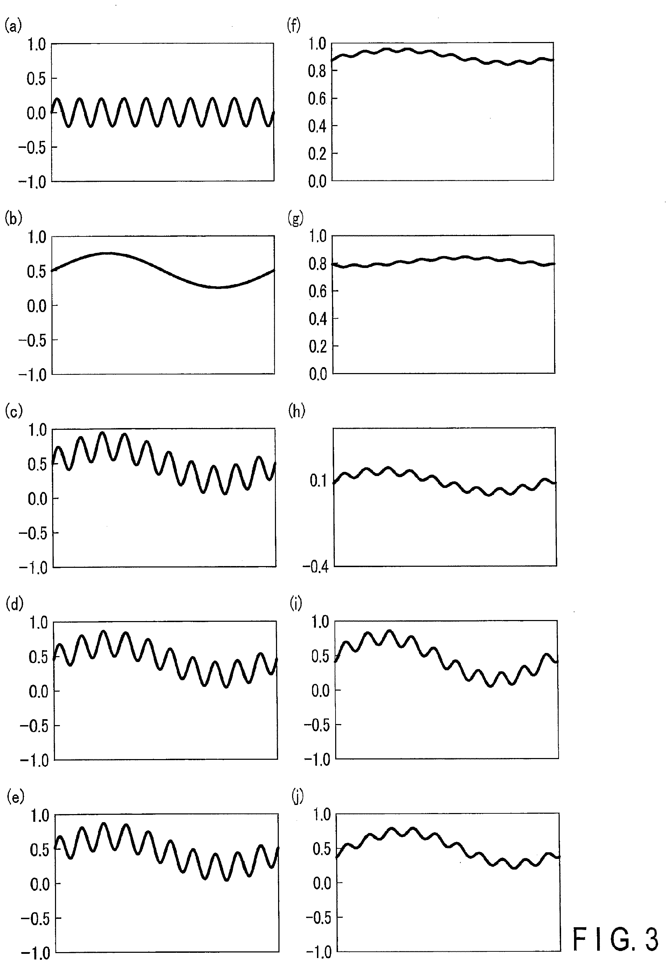

FIG. 2 shows an example of the functional configuration of the effective power control unit 20 according to the first embodiment. FIG. 3 shows examples of waveforms of signals in the respective units in the effective power command value calculation unit 21X shown in FIG. 2. However, the waveforms shown in FIG. 3 are waveforms of signals in the respective units shown schematically for easier understanding, and are different from actual waveforms. The signals may also be processed as analog signals and/or digital signals without being converted into waveforms in the effective power command value calculation unit 21X.

The effective power command value calculation unit 21X shown in FIG. 2 includes, as various functions, a first effective power command value calculation unit 53, a second effective power command value calculation unit 54, a signal processing unit (signal processing means such as a low-pass filter) 55, a rotation speed command value calculation unit 56, a rotation speed calculation unit 57, a rotation speed deviation calculation unit 58, and a third effective power command value calculation unit 59.

Graph (a) of FIG. 3 shows an example of the waveform of the signal of the charge/discharge command value, which is input to the first effective power command value calculation unit 53. Graph (b) of FIG. 3 shows an example of the waveform of the signal of the output command value, which is input to the first effective power command value calculation unit 53. Graph (c) of FIG. 3 shows an example of the waveform of the signal of the first effective power command value, which is output from the first effective power command value calculation unit 53 and input to the second effective power command value calculation unit 54 and the signal processing unit 55.

Graph (d) of FIG. 3 shows an example of the waveform of the signal of the effective power measurement value, which is output from the effective power measurement unit 23 and input to the second effective power command value calculation unit 54. Graph (e) of FIG. 3 shows an example of the waveform of the signal of the second effective power command value, which is output from the second effective power command value calculation unit 54 and supplied to the secondary current command value calculation unit 31 in FIG. 1.

FIG. 3(j) shows an example of the waveform (waveform with high-frequency components reduced) of the signal of the first effective power command value, which is output from the signal processing unit 55 and input to the rotation speed command value calculation unit 56. Graph (f) of FIG. 3 shows an example of the waveform of the signal of the rotation speed command value, which is output from the rotation speed command value calculation unit 56 and input to the rotation speed deviation calculation unit 58. Graph (g) of FIG. 3 shows an example of the waveform of the signal of the rotation speed measurement value, which is input from the rotation speed calculation unit 57 to the rotation speed deviation calculation unit 58. Graph (h) of FIG. 3 shows an example of the waveform of the signal of the rotation speed deviation, which is output from the rotation speed deviation calculation unit 58 and input to the third effective power command value calculation unit 59. Graph (i) of FIG. 3 shows an example of the waveform of the signal of the third effective power command value, which is output from the third effective power command value calculation unit 59 and supplied to the governor control command value calculation unit 41 in FIG. 1. The waveform of the signal of the third effective power command value in Graph (i) of FIG. 3 is a waveform in which the amplitude of high-frequency components is reduced in comparison to the waveform of the signal of the second effective power command value in Graph (e) of FIG. 3.

In general, the output command value varies up and down slower in a longer cycle than the charge/discharge command value (i.e., has a lower frequency than the charge/discharge command value). In contrast, the charge/discharge command value varies up and down rapidly in a shorter cycle than the output command value (i.e., has a higher frequency than the output command value).

The second effective power command value has both of the above-described features of the output command value and the charge/discharge command value. This enables the generator motor to output effective power according to both of the output command value and the charge/discharge command value. In contrast, the third effective power command value has the features of the output command value and the charge/discharge command value, but the feature of the charge/discharge command value is suppressed. In this example, high-frequency components of the charge/discharge command value are reduced. This enables reduction in unnecessary operations of the flow adjustment means.

Here, each function constituting the effective power command value calculation unit 21X will be described.

The first effective power command value calculation unit 53 calculates a first effective power command value using a charge/discharge command value and an output command value, and outputs the first effective power command value. This calculation includes, for example, an addition of the charge/discharge command value and the output command value. However, the calculation is not limited to this example. For example, when the charge/discharge command value or the output command value is represented by a negative value, a subtraction, not an addition, may be performed. There may be a case where it is preferable to perform an addition after multiplying the charge/discharge command value or the output command value by a certain weighting coefficient.

The second effective power command value calculation unit 54 calculates a second effective power command value using the first effective power command value output from the first effective power command value calculation unit 53 and an effective power measurement value output from the effective power measurement unit 23, and outputs the second effective power command value. In this calculation, a correction value of the first effective power command value is obtained from, for example, the effective power measurement value and the first effective power command value in accordance with a predetermined processing method (such as a formula or an algorithm), and is output as the second effective power command value. For example, when the effective power measurement value is smaller than the first effective power command value, a positive correction value (correction value to increase the effective power) is output. When the effective power measurement value is larger than the first effective power command value, a negative correction value (correction value to decrease the effective power) is output. Feedback control of the effective power command value using the effective power measurement value is implemented in this manner.

The signal processing unit 55 generates and outputs a signal obtained by reducing or removing high-frequency components not less than, or higher than, a predetermined frequency (high-frequency components of the first effective power command value) from the first effective power command value output from the first effective power command value calculation unit 53. The signal processing unit 55 is implemented using, for example, a low-pass filter or means for calculating a moving average.

The rotation speed command value calculation unit 56 calculates a rotation speed command value for the pump turbine 2 operating as a prime mover, using the signal obtained by reducing or removing the high-frequency components and that is output from the signal processing unit 55 and an effective head calculation value output from the effective head calculation unit 22, and outputs the rotation speed command value.

The rotation speed calculation unit 57 receives an angle signal supplied from the rotation angle detector KA, calculates a rotation speed measurement value, converts the rotation speed measurement value into a signal suitable for processing at the effective power command value calculation unit 21X, and outputs the signal. FIG. 1 shows the case where a rotation speed is calculated from an angle signal from the rotation angle detector KA; however, it is possible to provide rotation speed detection means instead of the rotation angle detector KA and provide a rotation speed input unit instead of the rotation speed calculation unit 57, thereby detecting a rotation speed. Alternatively, it is possible to detect a signal (such as a voltage frequency) other than the angle signal, and calculate a rotation speed from the signal.

The rotation speed deviation calculation unit 58 compares the rotation speed command value output from the rotation speed command value calculation unit 56 with the rotation speed measurement value output from the rotation speed calculation unit 57, and calculates and outputs a deviation (rotation speed deviation) of the values.

The third effective power command value calculation unit 59 calculates a third effective power command value using the rotation speed deviation output from the rotation speed deviation calculation unit 58. In this calculation, a correction value of the effective power command value is obtained based on, for example, the rotation speed deviation in accordance with a predetermined signal processing method (such as a formula or an algorithm), and is output as the third effective power command value (guide vane opening command value). For example, when the rotation speed deviation is positive (the rotation speed measurement value is smaller than the rotation speed command value), a positive correction value (correction value to increase the guide vane opening) is output, whereas when the rotation speed deviation is negative (the rotation speed measurement value is larger than the rotation speed command value), a negative correction value (correction value to decrease the guide vane opening) is output. Feedback control of the effective power command value using the rotation speed deviation is implemented in this manner.

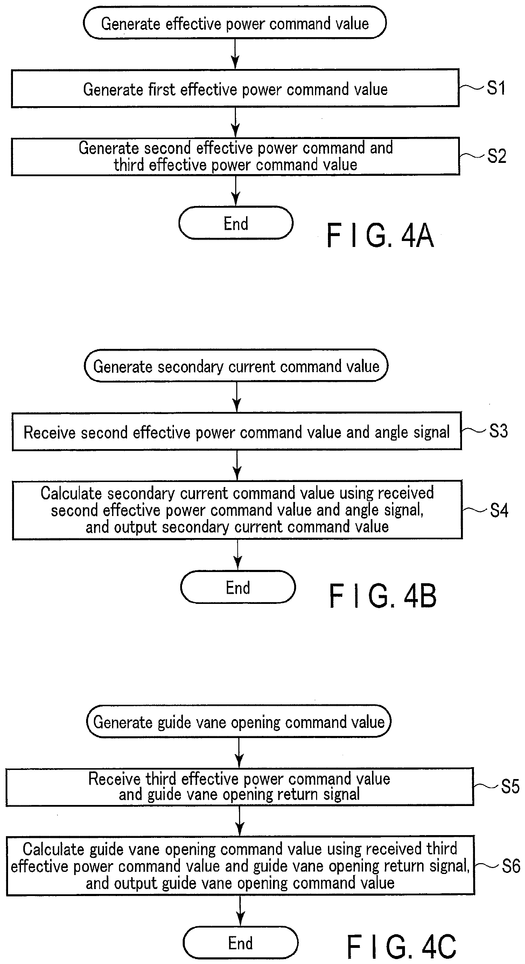

Next, an example of the operation by the effective power command value calculation unit 21X in the effective power control unit 20 shown in FIGS. 1 and 2 will be described with reference to the flowchart of FIG. 4A.

As shown in FIG. 4A, the effective power command value calculation unit 21X first generates a first effective power command value (step S1) and then generates a second effective power command value and a third effective power command value using the first effective power command value (step S2).

Next, an example of the operation by the secondary current command value calculation unit (power conversion control command value calculation means) 31 shown in FIG. 1 will be described with reference to the flowchart of FIG. 4B.

As shown in FIG. 4B, the secondary current command value calculation unit 31 receives the second effective power command value supplied from the effective power command value calculation unit 21X and receives an angle signal supplied from the rotation angle detector KA (step S3). The secondary current command value calculation unit 31 then calculates a secondary current command value (power conversion control command value) to be provided to the secondary exciter (power conversion means) 8 using the received second effective power command value and angle signal, and outputs the secondary current command value (step S4).

Next, an example of the operation by the governor control command value calculation unit (governing control command value calculation means) 41 shown in FIG. 1 will be described with reference to the flowchart of FIG. 4C.

As shown in FIG. 4C, the governor control command value calculation unit 41 receives the third current command value supplied from the effective power command value calculation unit 21X and receives the guide vane opening return signal supplied from the servomotor 9 (step S5). The governor control command value calculation unit 41 calculates a guide vane opening command value to be provided to the governor (governing means) 10, using the received third effective power command value and guide vane opening return signal, and outputs the guide vane opening command value (step S6).

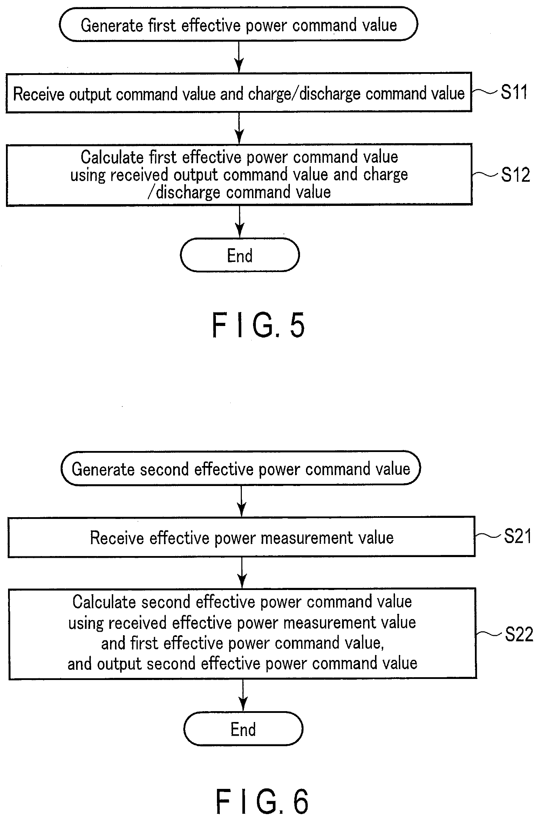

FIG. 5 shows an example of the procedure for generating a first effective power command value.

The effective power command value calculation unit 21X receives an output command value supplied from a host controller or the like, and receives a charge/discharge command value supplied from a host controller or the like (step S11).

Then, the effective power command value calculation unit 21X calculates a first effective power command value at the first effective power command value calculation unit 53, using the output command value and charge/discharge command value (step S12).

FIG. 6 shows an example of the procedure for generating a second effective power command value.

The effective power command value calculation unit 21X receives an effective power measurement value obtained by the effective power measurement unit 23 (step S21).

Then, the effective power command value calculation unit 21X calculates a second effective power command value at the second effective power command value calculation unit 54, using the received effective power measurement value and the first effective power command value output from the first effective power command value calculation unit 53, and outputs the calculated second effective power command value (step S22).

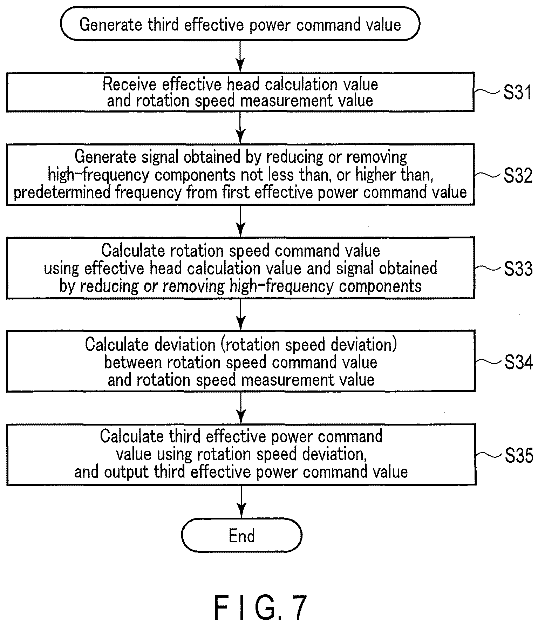

FIG. 7 shows an example of the procedure for generating a third effective power command value. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated based on an angle signal supplied from the rotation angle detector KA and output by the rotation speed calculation unit 57 (step S31).

The effective power command value calculation unit 21X then generates, at the signal processing unit (signal processing means such as a low-pass filter) 55, a signal obtained by reducing or removing high-frequency components not less than, or higher than, a predetermined frequency (high-frequency components of the first effective power command value) from the first effective power command output from the first effective power command value calculation unit 53 (step S32).

The effective power command value calculation unit 21X then calculates, at the rotation speed command value calculation unit 56, a rotation speed command value for the pump turbine 2 operating as a prime mover, using the signal obtained by reducing or removing the high-frequency components and that is output from the signal processing unit 55 and the effective head calculation value output from the effective head calculation unit 22, and outputs the rotation speed command value (step S33).

The effective power command value calculation unit 21X then compares, at the rotation speed deviation calculation unit 58, the rotation speed command value output from the rotation speed command value calculation unit 56 with the rotation speed measurement value output from the rotation speed calculation unit 57, and calculates and outputs a deviation (rotation speed deviation) of the values (step S34).

The effective power command value calculation unit 21X then calculates, at the third effective power command value calculation unit 59, a third effective power command value, using the rotation speed deviation output from the rotation speed deviation calculation unit 58, and outputs the calculated third effective power command value (step S35).

In the electric power control device 100 according to the first embodiment, an output command value and a charge/discharge command value are received, and the secondary exciter 8 and the governor 10 are controlled respectively by the secondary current command value and the guide vane opening command value, which vary in accordance with the changes in both of the output command value and the charge/discharge command value; accordingly, the generator motor 3 and the pump turbine 2 can be operated in accordance with the output command value and the charge/discharge command value.

In addition, according to the first embodiment, the second effective power command value, which is supplied from the effective power command value calculation unit 21X in the effective power control unit 20 to the secondary current command value calculation unit 31, includes both of the features of the output command value and the charge/discharge command value, whereas the third effective power command value, which is supplied from the effective power command value calculation unit 21X in the effective power control unit 20 to the governor control command value calculation unit 41, includes both of the features of the output command value and the charge/discharge command value, but high-frequency components of the charge/discharge command value are reduced by the signal processing unit 55; therefore, unnecessary operations (such as an opening/closing operation of the guide vane, which is frequently performed) of the flow adjustment means, which is controlled with the guide vane opening command value, can be reduced, which leads to smaller variations in water pressure in a penstock or the like and longer life of the flow adjustment means.

### [Second Embodiment]

Next, a second embodiment will be described. Hereinafter, descriptions of the matters shared with the first embodiment will be omitted, and different matters will be mainly described.

The above-described configuration shown in FIG. 1 is also applied to the second embodiment. The basic configuration of the electric power control device 100 according to the second embodiment is the same as that shown in FIG. 1.

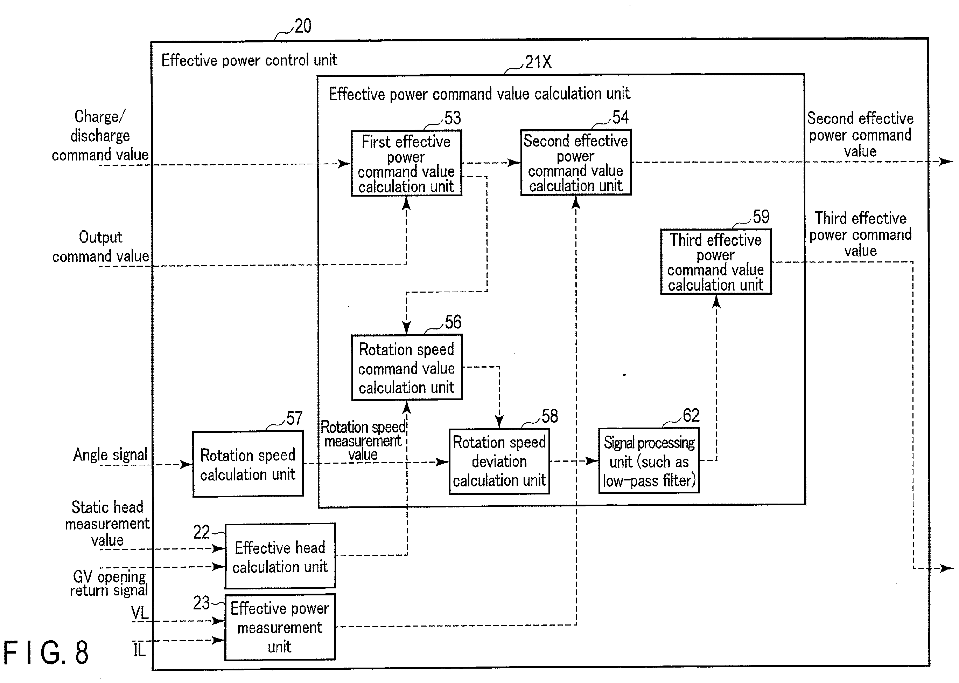

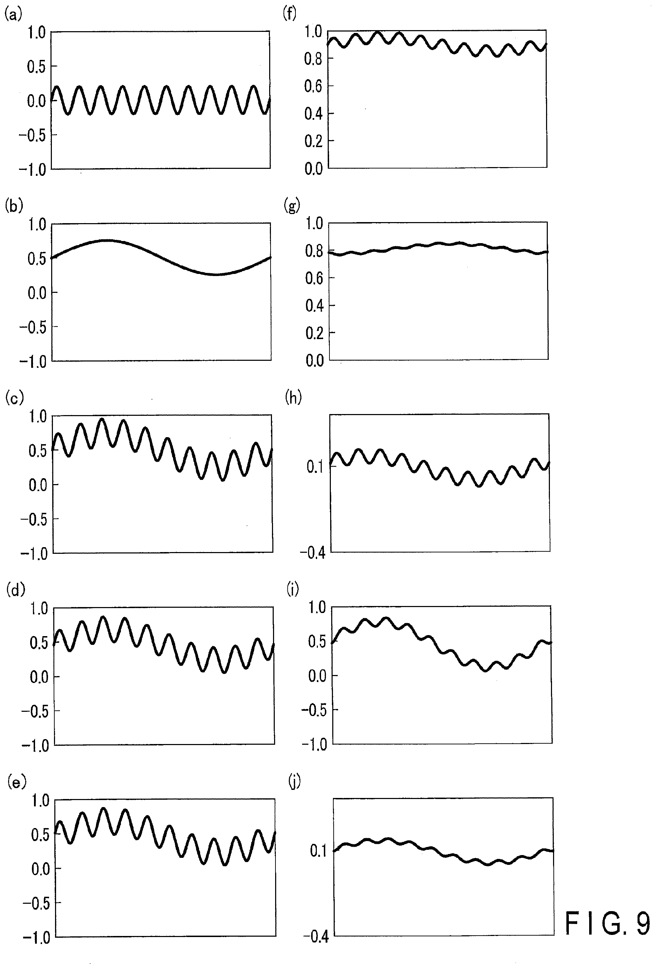

FIG. 8 shows an example of the functional configuration of the effective power control unit 20 according to the second embodiment. In FIG. 8, the elements having the same functions as those in the effective power control unit 20 according to the first embodiment, which are shown in FIG. 2, are assigned the same reference numerals as those used in the first embodiment. FIG. 9 briefly shows examples of waveforms of signals in the respective units in the effective power command value calculation unit 21X shown in FIG. 8. However, the waveforms shown in FIG. 9 are waveforms of signals in the respective units shown schematically for easier understanding, and are different from actual waveforms. The signals may also be processed as analog signals and/or digital signals without being converted into waveforms in the effective power command value calculation unit 21X.

The effective power control unit 20 (FIG. 8) according to the second embodiment differs from the above-described effective power control unit 20 (FIG. 2) according to the first embodiment in that the above-described signal processing unit (signal processing means such as a low-pass filter) 55 is not provided in the effective power command value calculation unit 21X; instead, a signal processing unit (signal processing means such as a low-pass filter) 62 is provided on a path connecting the rotation speed deviation calculation unit 58 to the third effective power command value calculation unit 59, for example.

Graph (a) of FIG. 9 shows an example of the waveform of the signal of the charge/discharge command value, which is input to the first effective power command value calculation unit 53. Graph (b) of FIG. 9 shows an example of the waveform of the signal of the output command value, which is input to the first effective power command value calculation unit 53. Graph (c) of FIG. 9 shows an example of the waveform of the signal of the first effective power command value, which is output from the first effective power command value calculation unit 53 and input to the second effective power command value calculation unit 54 and the rotation speed command value calculation unit 56.

Graph (d) of FIG. 9 shows an example of the waveform of the signal of the effective power measurement value, which is output from the effective power measurement unit 23 and input to the second effective power command value calculation unit 54. Graph (e) of FIG. 9 shows an example of the waveform of the signal of the second effective power command value, which is output from the second effective power command value calculation unit 54 and supplied to the secondary current command value calculation unit 31 in FIG. 1.

Graph (f) of FIG. 9 shows an example of the waveform of the signal of the rotation speed command value, which is output from the rotation speed command value calculation unit 56 and input to the rotation speed deviation calculation unit 58. Graph (g) of FIG. 9 shows an example of the waveform of the signal of the rotation speed measurement value, which is input from the rotation speed calculation unit 57 to the rotation speed deviation calculation unit 58. Graph (h) of FIG. 9 shows an example of the waveform of the signal of the rotation speed deviation, which is output from the rotation speed deviation calculation unit 58 and input to the signal processing unit 62. Graph (j) of FIG. 9 shows an example of the waveform of a signal obtained by reducing high-frequency components of the rotation speed deviation, which is output from the signal processing unit 62 and input to the third effective power command value calculation unit 59. Graph (i) of FIG. 9 shows an example of the waveform of the signal of the third effective power command value, which is output from the third effective power command value calculation unit 59 and supplied to the governor control command value calculation unit 41 in FIG. 1. The waveform of the signal of the third effective power command value in Graph (i) of FIG. 9 is a waveform in which the amplitudes of short-period components are reduced in comparison to the waveform of the signal of the second effective power command value in Graph (e) of FIG. 9.

In the second embodiment, the rotation speed command value calculation unit 56 calculates a rotation speed command value for the pump turbine 2 operating as a prime mover, using the first effective power command value output from the first effective power command value calculation unit 53 and the effective head calculation value output from the effective head calculation unit 22, and outputs the rotation speed command value.

The signal processing unit 62 generates and outputs a signal obtained by reducing or removing high-frequency components not less than, or higher than, a predetermined frequency (high-frequency components of the rotation speed deviation) from the rotation speed deviation output from the rotation speed deviation calculation unit 58. The signal processing unit 62 is implemented using, for example, a low-pass filter or means for calculating a moving average.

The third effective power command value calculation unit 59 calculates a third effective power command value using the signal obtained by reducing or removing the high-frequency components from the rotation speed deviation and that is output from the signal processing unit 62. In the calculation, a correction value of the effective power command value is calculated from, for example, the signal obtained by reducing or removing the high-frequency components from the rotation speed deviation, in accordance with a predetermined signal processing method (such as a formula or algorithm), and is output as the third effective power command value (guide vane opening command value). For example, when the rotation speed deviation is positive (the rotation speed measurement value is smaller than the rotation speed command value), the effective power command value is increased, whereas when the rotation speed deviation is negative (the rotation speed measurement value is larger than the rotation speed command value), the effective power command value is decreased. Feedback control of the effective power command value using the signal obtained by reducing or removing the high-frequency components of the rotation speed deviation is implemented in this manner.

Next, an example of the operation by the effective power command value calculation unit 21X in the effective power control unit 20 shown in FIG. 8 will be described with reference to a flowchart.

The above-described procedures shown in FIGS. 4A to 6 are also applied to the second embodiment. The basic operation of the effective power command value calculation unit 21X according to the second embodiment is the same as that shown in FIG. 4A. The procedure for generating a first effective power command value and the procedure for generating a second effective power command value are the same as those shown in FIGS. 5 and 6.

The procedure for generating a third effective power command value differs from that in the first embodiment.

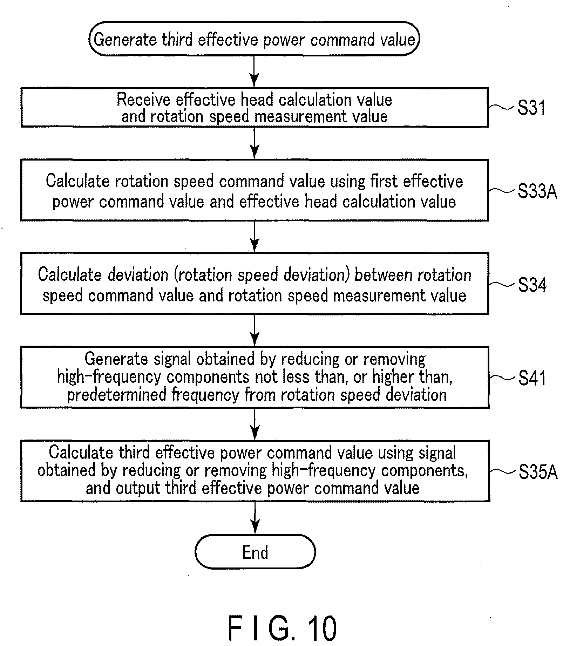

FIG. 10 shows an example of the procedure for generating a third effective power command value according to the second embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then calculates, at the rotation speed command value calculation unit 56, a rotation speed command value for the pump turbine 2 operating as a prime mover, using the first effective power command value output from the first effective power command value calculation unit 53 and the effective head calculation value output from the effective head calculation unit 22, and outputs the rotation speed command value (step S33A).

The effective power command value calculation unit 21X then compares, at the rotation speed deviation calculation unit 58, the rotation speed command value output from the rotation speed command value calculation unit 56 with the rotation speed measurement value output from the rotation speed calculation unit 57, and calculates and outputs a deviation (rotation speed deviation) between the values (step S34).

The effective power command value calculation unit 21X then generates, at the signal processing unit (signal processing means such as a low-pass filter) 62, a signal obtained by reducing or removing high-frequency components not less than, or higher than, a predetermined frequency (high-frequency components of the rotation speed deviation) from the rotation speed deviation output from the rotation speed deviation calculation unit 58 (step S41).

The effective power command value calculation unit 21X then calculates, at the third effective power command value calculation unit 59, a third effective power command value, using the signal obtained by reducing or removing the high-frequency components of the rotation speed deviation and that is output from the signal processing unit 62, and outputs the calculated third effective power command value (step S35A).

According to the second embodiment, the above-described signal processing unit 55 is not provided on the path connecting the first effective power command value calculation unit 53 to the rotation speed command value calculation unit 56, and a signal is transferred from the first effective power command value calculation unit 53 to the rotation speed command value calculation unit 56 without reduction of high-frequency components of the charge/discharge command value; however, since the signal processing unit 62 is provided on the path connecting the rotation speed deviation calculation unit 58 to the third effective power command value calculation unit 59, a third effective power command value with few high-frequency components can be supplied to the governor control command value calculation unit 41; therefore, unnecessary operations (such as an opening/closing operation of the guide vane, which is frequently performed) of the flow adjustment means, which is controlled with the guide vane opening command value, can be reduced, which leads to smaller variation in water pressure of a penstock or the like and longer life of the flow adjustment means.

### [Third Embodiment]

Next, a third embodiment will be described. Hereinafter, descriptions of the matters shared with the first embodiment will be omitted, and different matters will be mainly described.

The above-described configuration shown in FIG. 1 is also applied to the third embodiment. The basic configuration of the electric power control device 100 according to the third embodiment is the same as that shown in FIG. 1.

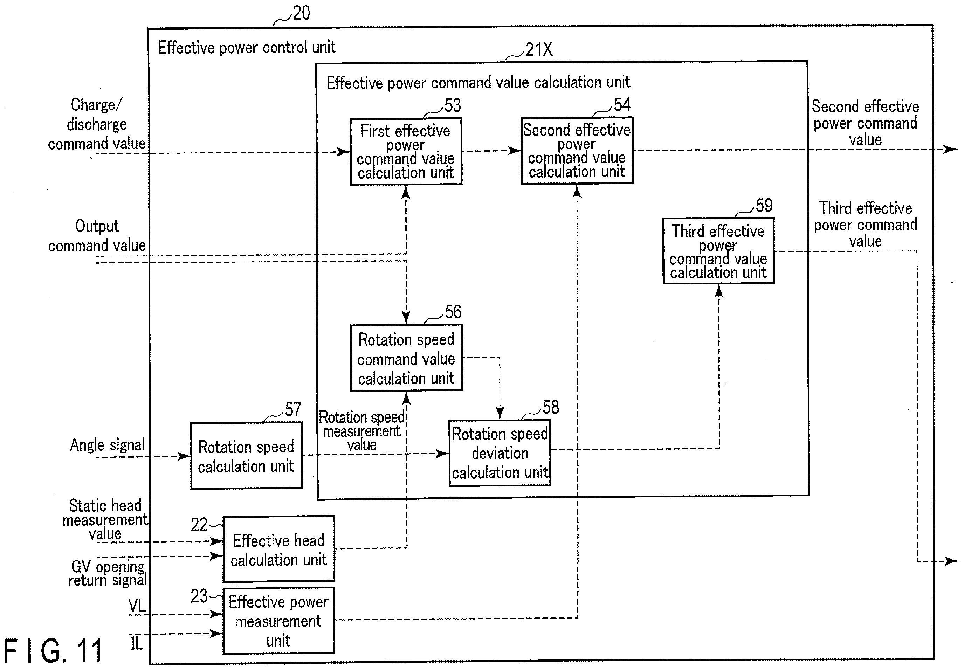

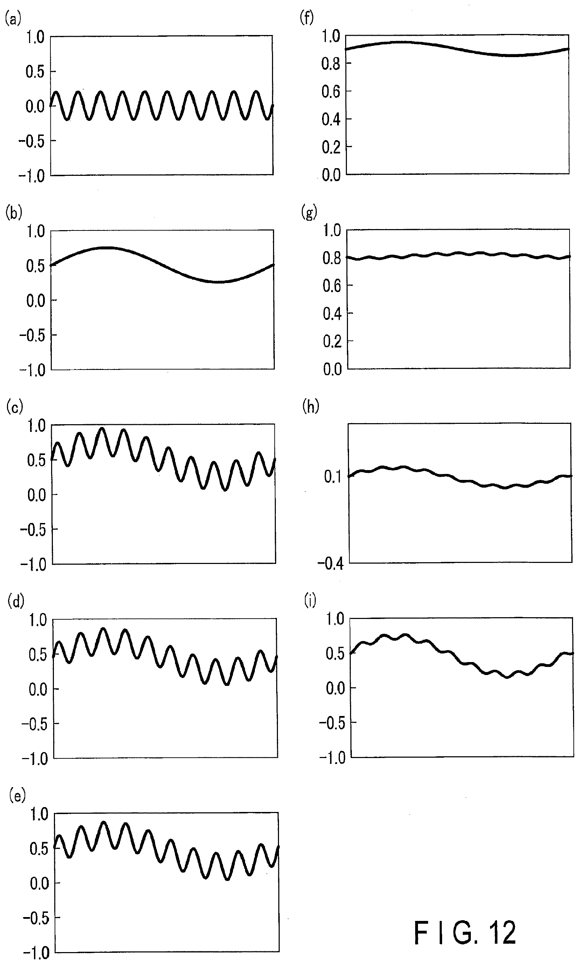

FIG. 11 shows an example of the functional configuration of the effective power control unit 20 according to the third embodiment. In FIG. 11, the elements having the same functions as those in the effective power control unit 20 according to the first embodiment, which are shown in FIG. 2, are assigned the same reference numerals as those used in the first embodiment. FIG. 12 briefly shows examples of waveforms of signals in the respective units in the effective power command value calculation unit 21X shown in FIG. 11. However, the waveforms shown in FIG. 12 are waveforms of signals in the respective units shown schematically for easier understanding, and are different from actual waveforms. The signals may also be processed as analog signals and/or digital signals without being converted into waveforms in the effective power command value calculation unit 21X.

The effective power control unit 20 (FIG. 11) according to the third embodiment differs from the above-described effective power control unit 20 (FIG. 2) according to the first embodiment in that the above-described signal processing unit (signal processing means such as a low-pass filter) 55 is not provided in the effective power command value calculation unit 21X, and in that the rotation speed command value calculation unit 56 receives the output command value.

Graph (a) of FIG. 12 shows an example of the waveform of the signal of the charge/discharge command value, which is input to the first effective power command value calculation unit 53. Graph (b) of FIG. 12 shows an example of the waveform of the signal of the output command value, which is input to the first effective power command value calculation unit 53 and the rotation speed command value calculation unit 56. Graph (c) of FIG. 12 shows an example of the waveform of the signal of the first effective power command value, which is output from the first effective power command value calculation unit 53 and input to the second effective power command value calculation unit 54.

Graph (d) of FIG. 12 shows an example of the waveform of the signal of the effective power measurement value, which is output from the effective power measurement unit 23 and input to the second effective power command value calculation unit 54. Graph (e) of FIG. 12 shows an example of the waveform of the signal of the second effective power command value, which is output from the second effective power command value calculation unit 54 and supplied to the secondary current command value calculation unit 31 in FIG. 1.

Graph (f) of FIG. 12 shows an example of the waveform of the signal of the rotation speed command value, which is output from the rotation speed command value calculation unit 56 and input to the rotation speed deviation calculation unit 58. Graph (g) of FIG. 12 shows an example of the waveform of the signal of the rotation speed measurement value, which is input from the rotation speed calculation unit 57 to the rotation speed deviation calculation unit 58. Graph (h) of FIG. 12 shows an example of the waveform of the signal of the rotation speed deviation, which is output from the rotation speed deviation calculation unit 58 and input to the third effective power command value calculation unit 59. Graph (i) of FIG. 12 shows an example of the waveform of the signal of the third effective power command value, which is output from the third effective power command value calculation unit 59 and supplied to the governor control command value calculation unit 41 in FIG. 1.

In the third embodiment, the rotation speed command value calculation unit 56 calculates a rotation speed command value for the pump turbine 2 operating as a prime mover, using the first effective power command value output from the first effective power command value calculation unit 53 and the effective head calculation value output from the effective head calculation unit 22, and outputs the rotation speed command value.

Next, an example of the operation by the effective power command value calculation unit 21X in the effective power control unit 20 shown in FIG. 11 will be described with reference to a flowchart.

The above-described procedures shown in FIGS. 4A to 6 are also applied to the third embodiment. The basic operation of the effective power command value calculation unit 21X according to the third embodiment is the same as that shown in FIG. 4A. The procedure for generating a first effective power command value and the procedure for generating a second effective power command value are the same as those shown in FIGS. 5 and 6.

The procedure for generating a third effective power command value differs from those in the first and second embodiments.

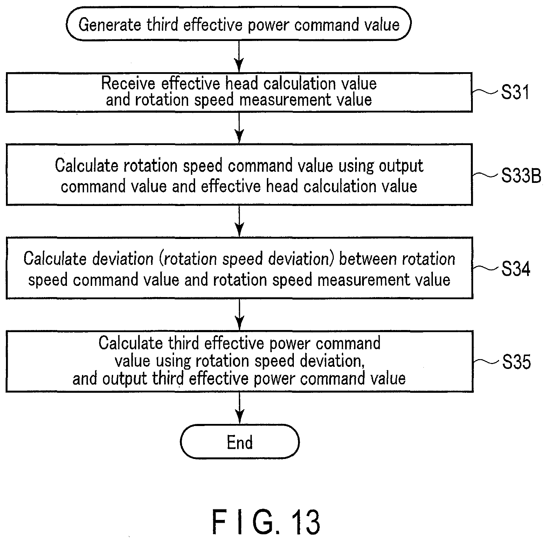

FIG. 13 shows an example of the procedure for generating a third effective power command value according to the third embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then calculates, at the rotation speed command value calculation unit 56, a rotation speed command value for the pump turbine 2 operating as a prime mover, using the output command value and the effective head calculation value output from the effective head calculation unit 22, and outputs the rotation speed command value (step S33B).

The effective power command value calculation unit 21X then compares, at the rotation speed deviation calculation unit 58, the rotation speed command value output from the rotation speed command value calculation unit 56 with the rotation speed measurement value output from the rotation speed calculation unit 57, and calculates and outputs a deviation (rotation speed deviation) between the values (step S34).

The effective power command value calculation unit 21X then calculates, at the third effective power command value calculation unit 59, a third effective power command value, using the rotation speed deviation output from the rotation speed deviation calculation unit 58, and outputs the calculated third effective power command value (step S35).

According to the third embodiment, in the absence of the above-described signal processing unit 55 and the path on which the signal processing unit 55 is provided, information of the charge/discharge command value is not directly reflected in the third effective power command value. However, since the rotation speed changes in accordance with the integral of the difference between the result (output of the generator motor) of control using the second effective power command value including the charge/discharge command value and the result (output of the pump turbine) of control using the third effective power command value, a deviation is caused between the rotation speed command value and the rotation speed measurement value, the rotation speed deviation is input to the third effective power command value calculation unit 59 and, as a result, low-frequency components of the charge/discharge command value are reflected in the third effective power command value. According to the third embodiment, the operation of the generator motor 3 according to the charge/discharge command value can be implemented while omitting the signal processing unit 55 (such as a low-pass filter) and reducing costs, and unnecessary operations (such as an opening/closing operation of the guide vane, which is frequently performed) of the flow adjustment means, which is controlled with the guide vane opening command value, can be reduced, which leads to smaller variation in water pressure of a penstock or the like and longer life of the flow adjustment means.

### [Fourth Embodiment (First Example)]

Next, a first example of a fourth embodiment will be described. Hereinafter, descriptions of the matters shared with the third embodiment will be omitted, and different matters will be mainly described.

The above-described configuration shown in FIG. 1 is also applied to the first example of the fourth embodiment. The basic configuration of the electric power control device 100 according to the first example of the fourth embodiment is the same as that shown in FIG. 1.

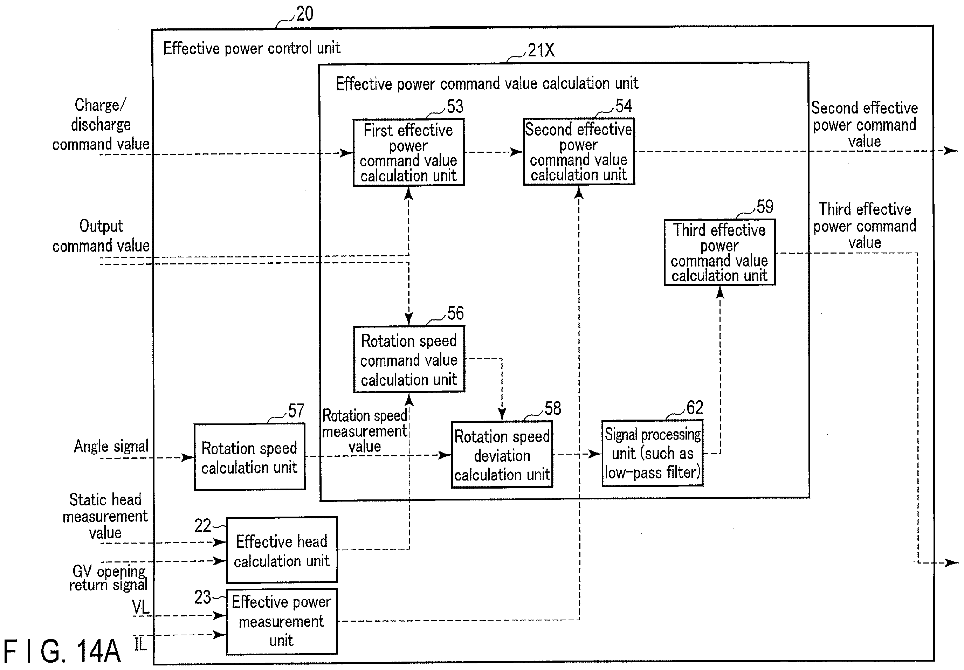

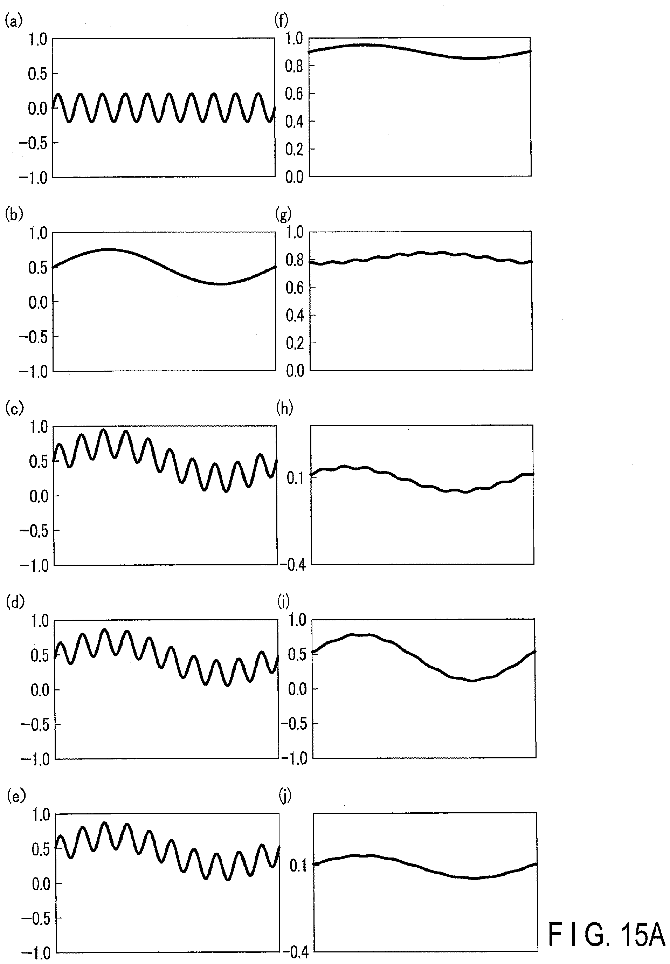

FIG. 14A shows an example of the functional configuration of the effective power control unit 20 according to the first example of the fourth embodiment. In FIG. 14A, the elements having the same functions as those in the effective power control unit 20 according to the third embodiment, which are shown in FIG. 11, are assigned the same reference numerals as those used in the third embodiment. FIG. 15A briefly shows examples of waveforms of signals in the respective units in the effective power command value calculation unit 21X shown in FIG. 14A. However, the waveforms shown in FIG. 15A are waveforms of signals in the respective units shown schematically for easier understanding, and are different from actual waveforms. The signals may also be processed as analog signals and/or digital signals without being converted into waveforms in the effective power command value calculation unit 21X.

The effective power control unit 20 (FIG. 14A) according to the first example of the fourth embodiment differs from the above-described effective power control unit 20 (FIG. 11) according to the third embodiment in that a signal processing unit (signal processing means such as a low-pass filter) 62 is provided on a path connecting the rotation speed deviation calculation unit 58 to the third effective power command value calculation unit 59, for example. The signal processing unit 62 has the same function as the signal processing unit 62 in FIG. 8 described in the second embodiment.

Graph (a) of FIG. 15A shows an example of the waveform of the signal of the charge/discharge command value, which is input to the first effective power command value calculation unit 53. Graph (b) of FIG. 15A shows an example of the waveform of the signal of the output command value, which is input to the first effective power command value calculation unit 53 and the rotation speed command value calculation unit 56. Graph (c) of FIG. 15A shows an example of the waveform of the signal of the first effective power command value, which is output from the first effective power command value calculation unit 53 and input to the second effective power command value calculation unit 54.

Graph (d) of FIG. 15A shows an example of the waveform of the signal of the effective power measurement value, which is output from the effective power measurement unit 23 and input to the second effective power command value calculation unit 54. Graph (e) of FIG. 15A shows an example of the waveform of the signal of the second effective power command value, which is output from the second effective power command value calculation unit 54 and supplied to the secondary current command value calculation unit 31 in FIG. 1.

Graph (f) of FIG. 15A shows an example of the waveform of the signal of the rotation speed command value, which is output from the rotation speed command value calculation unit 56 and input to the rotation speed deviation calculation unit 58. Graph (g) of FIG. 15A shows an example of the waveform of the signal of the rotation speed measurement value, which is input from the rotation speed calculation unit 57 to the rotation speed deviation calculation unit 58. Graph (h) of FIG. 15A shows an example of the waveform of the signal of the rotation speed deviation, which is output from the rotation speed deviation calculation unit 58 and input to the signal processing unit 62. Graph (j) of FIG. 15A shows an example of the waveform of a signal obtained by reducing high-frequency components of the rotation speed deviation, which is output from the signal processing unit 62 and input to the third effective power command value calculation unit 59. Graph (i) of FIG. 15A shows an example of the waveform of the signal of the third effective power command value, which is output from the third effective power command value calculation unit 59 and supplied to the governor control command value calculation unit 41 in FIG. 1.

In the first example of the fourth embodiment, the signal processing unit 62 generates a signal obtained by reducing or removing high-frequency components not less than, or higher than, a predetermined frequency (high-frequency components of the rotation speed deviation) from the rotation speed deviation output from the rotation speed deviation calculation unit 58, and outputs the signal. The signal processing unit 62 is implemented using, for example, a low-pass filter or means for calculating a moving average.

The third effective power command value calculation unit 59 calculates a third effective power command value using the signal obtained by reducing or removing the high-frequency components from the rotation speed deviation and that is output from the signal processing unit 62. In the calculation, a correction value of the effective power command value is calculated from, for example, the signal obtained by reducing or removing the high-frequency components of the rotation speed deviation, in accordance with a predetermined signal processing method (such as a formula or algorithm), and is output as the third effective power command value. Feedback control of the effective power command value using the signal obtained by reducing or removing the high-frequency components of the rotation speed deviation is implemented in this manner.

Next, an example of the operation by the effective power command value calculation unit 21X in the effective power control unit 20 shown in FIG. 14A will be described with reference to a flowchart.

The above-described procedures shown in FIGS. 4A to 6 are also applied to the first example of the fourth embodiment. The basic operation of the effective power command value calculation unit 21X according to the first example of the fourth embodiment is the same as that shown in FIG. 4A. The procedure for generating a first effective power command value and the procedure for generating a second effective power command value are the same as those shown in FIGS. 5 and 6.

The procedure for generating a third effective power command value differs from those in the first to third embodiments.

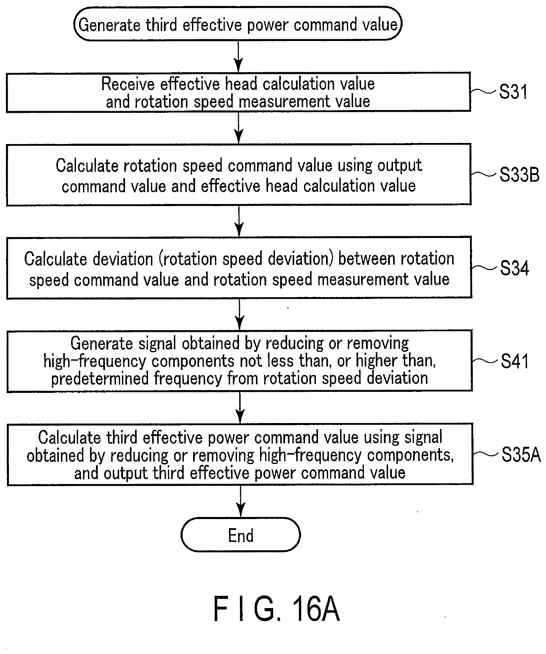

FIG. 16A shows an example of the procedure for generating a third effective power command value according to the first example of the fourth embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then calculates, at the rotation speed command value calculation unit 56, a rotation speed command value for the pump turbine 2 operating as a prime mover, using the output command value and the effective head calculation value output from the effective head calculation unit 22, and outputs the rotation speed command value (step S33B).

The effective power command value calculation unit 21X then compares, at the rotation speed deviation calculation unit 58, the rotation speed command value output from the rotation speed command value calculation unit 56 with the rotation speed measurement value output from the rotation speed calculation unit 57, and calculates and outputs a deviation (rotation speed deviation) between the values (step S34).

The effective power command value calculation unit 21X then generates, at the signal processing unit (signal processing means such as a low-pass filter) 62, a signal obtained by reducing or removing high-frequency components not less than, or higher than, a predetermined frequency (high-frequency components of the rotation speed deviation) from the rotation speed deviation output from the rotation speed deviation calculation unit 58 (step S41).

The effective power command value calculation unit 21X then calculates, at the third effective power command value calculation unit 59, a third effective power command value, using the signal obtained by reducing or removing the high-frequency components of the rotation speed deviation and that is output from the signal processing unit 62, and outputs the calculated third effective power command value (step S35A).

According to the first example of the fourth embodiment, in the absence of the above-described signal processing unit 55 and the path connecting the first effective power command value calculation unit 53 to the rotation speed command value calculation unit 56, information of the charge/discharge command value is not reflected in the third effective power command value. However, since the rotation speed changes in accordance with the integral of the difference between the result (output of the generator motor) of control using the second effective power command value including the charge/discharge command value and the result (output of the pump turbine) of control using the third effective power command value, a rotation speed deviation caused between the rotation speed command value and the rotation speed measurement value is input to the third effective power command value calculation unit 59 and, as a result, low-frequency components of the charge/discharge command value are reflected in the third effective power command value. According to the first example of the fourth embodiment, the operation of the generator motor 3 according to the charge/discharge command value can be implemented, and a third effective power command value with fewer high-frequency components than in the third embodiment can be supplied to the governor control command value calculation unit 41; therefore, unnecessary operations (such as an opening/closing operation of the guide vane, which is frequently performed) of the flow adjustment means, which is controlled with the guide vane opening command value, can be reduced, which leads to smaller variation in water pressure of a penstock or the like and longer life of the flow adjustment means.

### [Fourth Embodiment (Second Example)]

Next, a second example of the fourth embodiment will be described. Hereinafter, descriptions of the matters shared with the first example of the fourth embodiment will be omitted, and different matters will be mainly described.

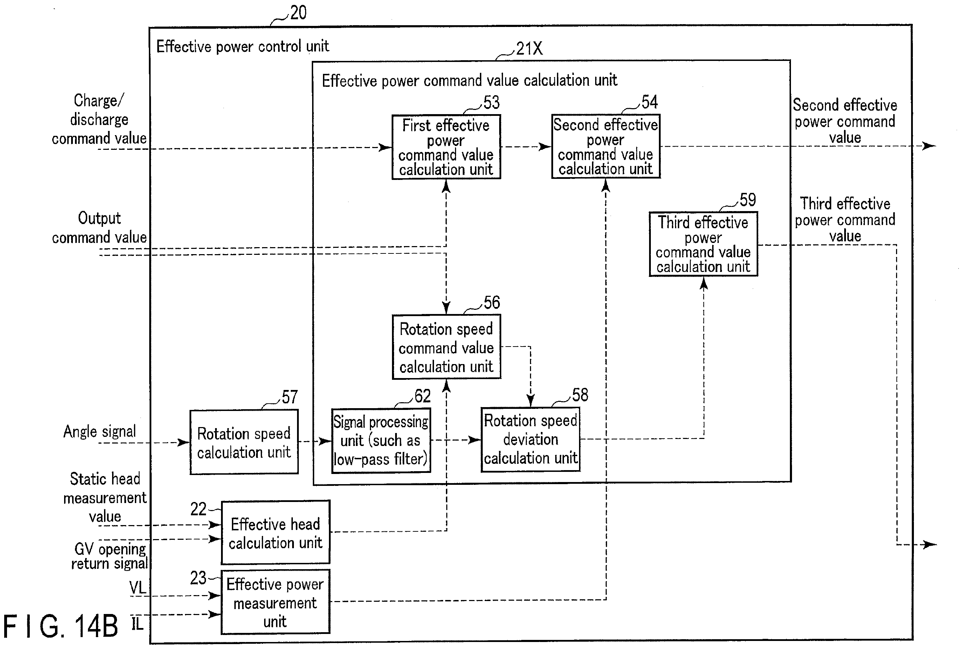

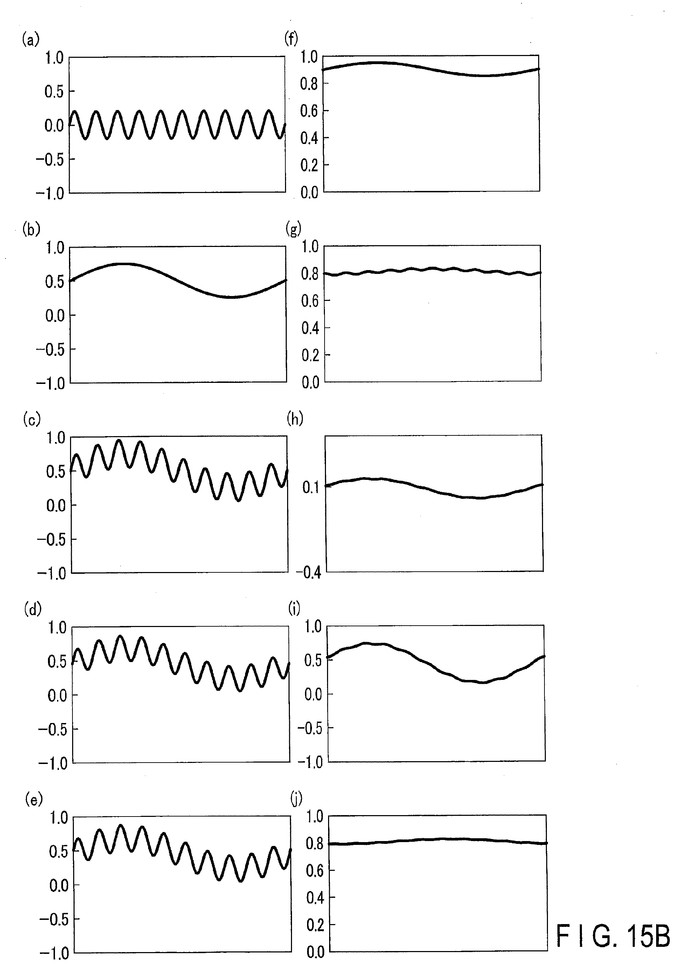

FIG. 14B shows an example of the functional configuration of the effective power control unit 20 according to the second example of the fourth embodiment. FIG. 15B shows examples of waveforms of signals in the respective units in the effective power command value calculation unit 21X shown in FIG. 14B. However, the waveforms shown in FIG. 15B are waveforms of signals in the respective units shown schematically for easier understanding, and are different from actual waveforms. The signals may also be processed as analog signals and/or digital signals without being converted into waveforms in the effective power command value calculation unit 21X.

The case where the signal processing unit (such as a low-pass filter) 62 is provided on the path connecting the rotation speed deviation calculation unit 58 to the third effective power command value calculation unit 59 is described in the first example of the fourth embodiment. In the second example of the fourth embodiment, the signal processing unit 62 is provided on the path connecting the rotation speed calculation unit 57 to the rotation speed deviation calculation unit 58. Similar advantageous effects can be attained with this configuration.

Graph (a) of FIG. 15B shows an example of the waveform of the signal of the charge/discharge command value, which is input to the first effective power command value calculation unit 53. Graph (b) of FIG. 15B shows an example of the waveform of the signal of the output command value, which is input to the first effective power command value calculation unit 53 and the rotation speed command value calculation unit 56. Graph (c) of FIG. 15B shows an example of the waveform of the signal of the first effective power command value, which is output from the first effective power command value calculation unit 53 and input to the second effective power command value calculation unit 54.

Graph (d) of FIG. 15B shows an example of the waveform of the signal of the effective power measurement value, which is output from the effective power measurement unit 23 and input to the second effective power command value calculation unit 54. Graph (e) of FIG. 15B shows an example of the waveform of the signal of the second effective power command value, which is output from the second effective power command value calculation unit 54 and supplied to the secondary current command value calculation unit 31 in FIG. 1.

Graph (f) of FIG. 15B shows an example of the waveform of the signal of the rotation speed command value, which is output from the rotation speed command value calculation unit 56 and input to the rotation speed deviation calculation unit 58. Graph (g) of FIG. 15B shows an example of the waveform of the signal of the rotation speed measurement value, which is input from the rotation speed calculation unit 57 to the signal processing unit 62. Graph (j) of FIG. 15B shows an example of the waveform of a signal obtained by reducing high-frequency components of the rotation speed deviation, which is output from the signal processing unit 62 and input to the rotation speed deviation calculation unit 58. Graph (h) of FIG. 15B shows an example of the waveform of the signal of the rotation speed deviation, which is output from the rotation speed deviation calculation unit 58 and input to the third effective power command value calculation unit 59. Graph (i) of FIG. 15B shows an example of the waveform of the signal of the third effective power command value, which is output from the third effective power command value calculation unit 59 and supplied to the governor control command value calculation unit 41 in FIG. 1.

In the second example of the fourth embodiment, the signal processing unit 62 generates a signal obtained by reducing or removing high-frequency components not less than, or higher than, a predetermined frequency (high-frequency components of the rotation speed measurement value) from the rotation speed measurement value output from the rotation speed calculation unit 57. The signal processing unit 62 is implemented using, for example, a low-pass filter or means for calculating a moving average.

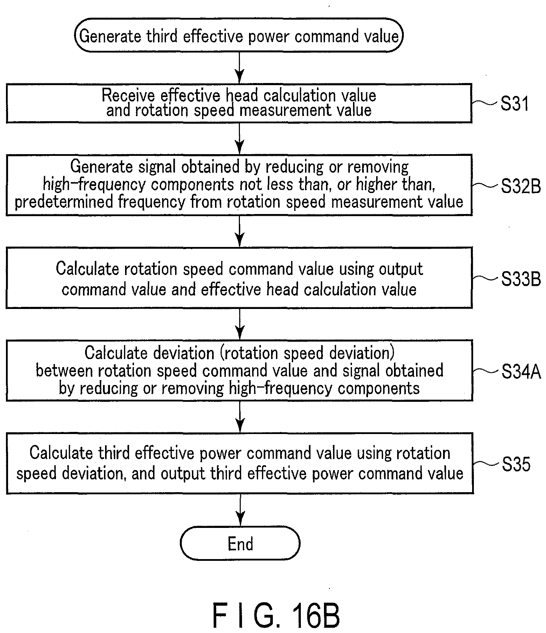

FIG. 16B shows an example of the procedure for generating a third effective power command value according to the second example of the fourth embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then generates, at the signal processing unit (signal processing means such as a low-pass filter) 62, a signal obtained by reducing or removing high-frequency components not less than, or higher than, a predetermined frequency from the rotation speed measurement value output from the rotation speed calculation unit 57 (step S32B).

The effective power command value calculation unit 21X then calculates, at the rotation speed command value calculation unit 56, a rotation speed command value for the pump turbine 2 operating as a prime mover, using the output command value and the effective head calculation value output from the effective head calculation unit 22, and outputs the rotation speed command value (step S33B).

The effective power command value calculation unit 21X then compares, at the rotation speed deviation calculation unit 58, the rotation speed command value output from the rotation speed command value calculation unit 56 with the signal obtained by reducing or removing the high-frequency components and that is output from the signal processing unit 62, and calculates and outputs a deviation (rotation speed deviation) between the value and the signal (step S34A).

The effective power command value calculation unit 21X then calculates, at the third effective power command value calculation unit 59, a third effective power command value, using the rotation speed deviation output from the rotation speed deviation calculation unit 58, and outputs the calculated third effective power command value (step S35).

The second example of the fourth embodiment can produce advantageous effects similar to those of the first example of the fourth embodiment.

### [Fifth Embodiment (First Example)]

Next, a first example of a fifth embodiment will be described. Hereinafter, descriptions of the matters shared with the third embodiment will be omitted, and different matters will be mainly described.

The above-described configuration shown in FIG. 1 is also applied to the first example of the fifth embodiment. The basic configuration of the electric power control device 100 according to the first example of the fifth embodiment is the same as that shown in FIG. 1.

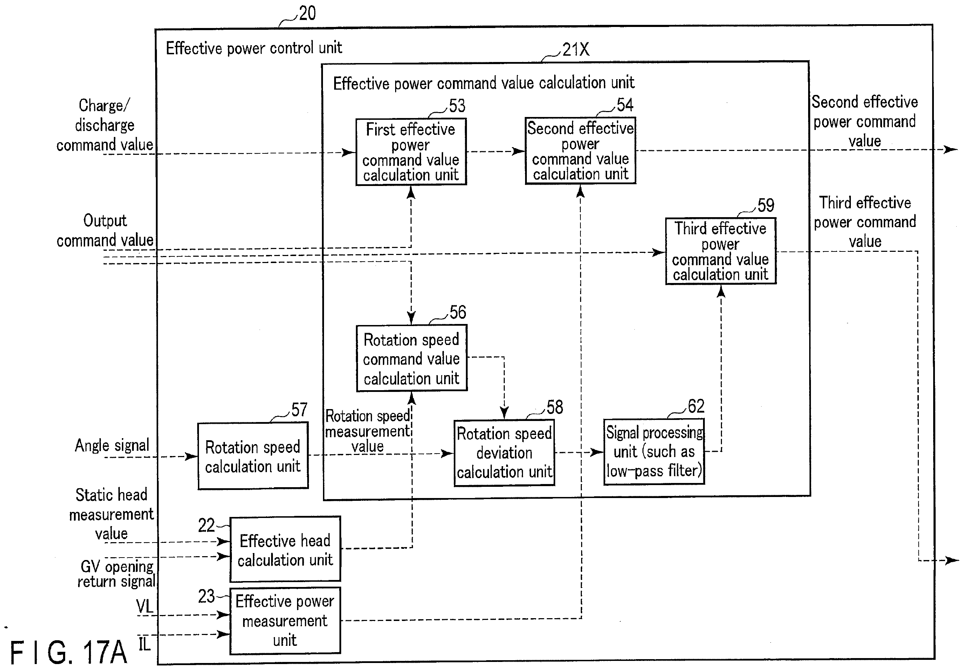

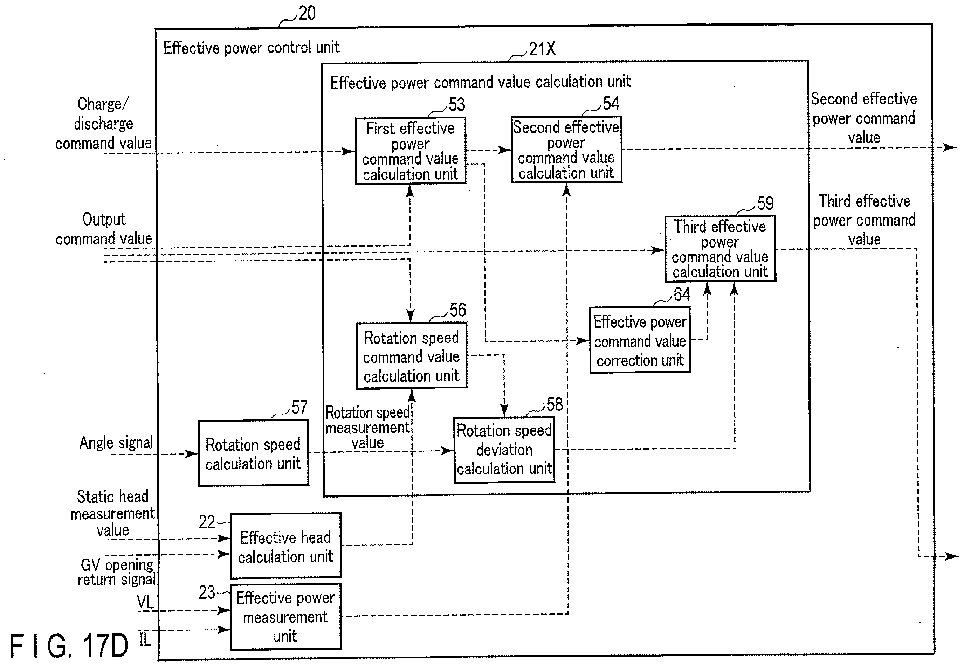

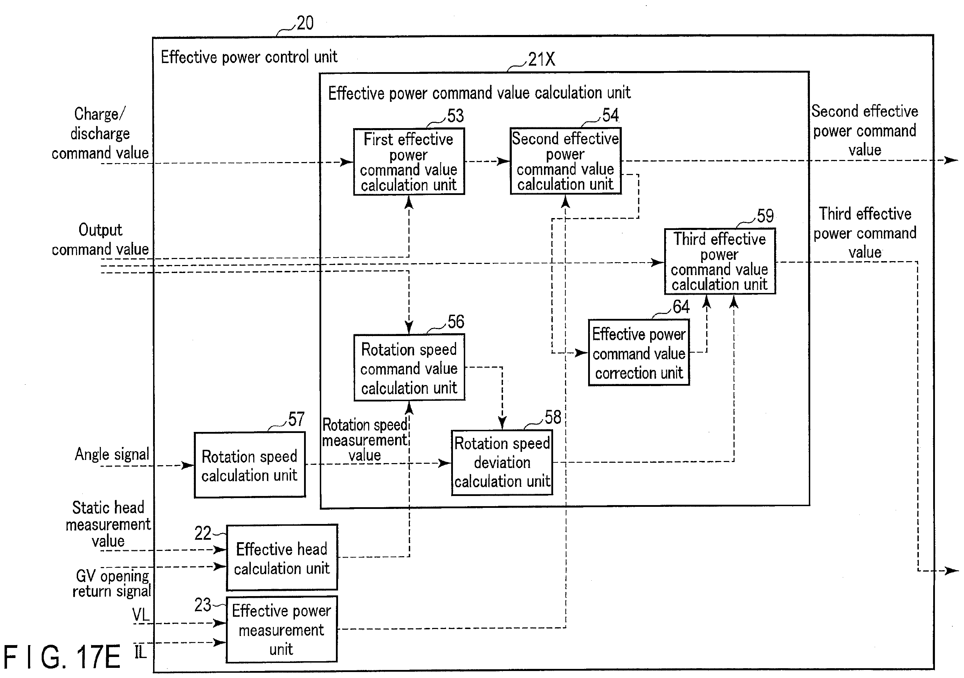

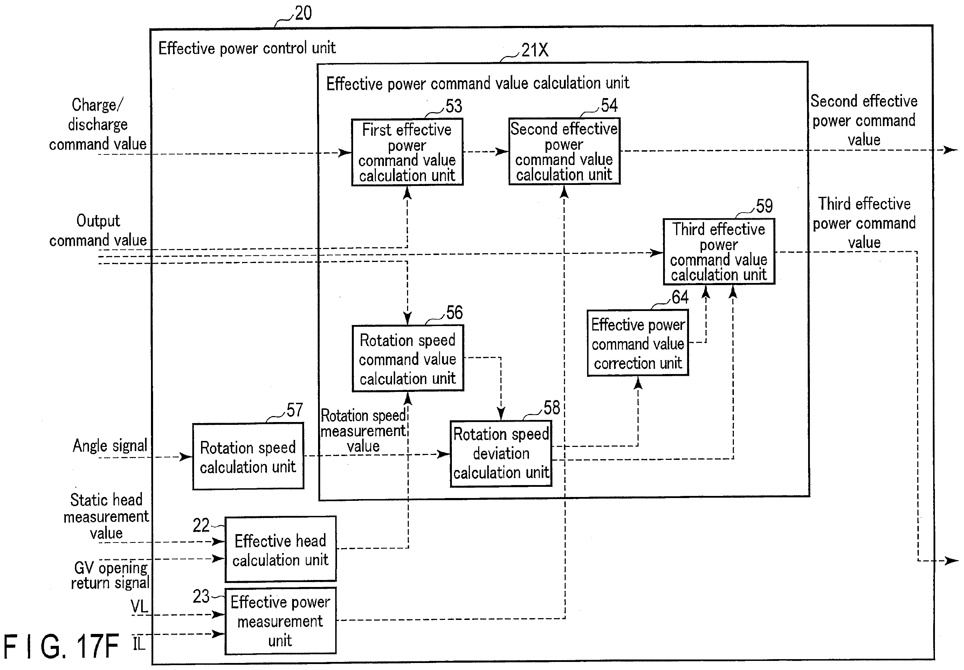

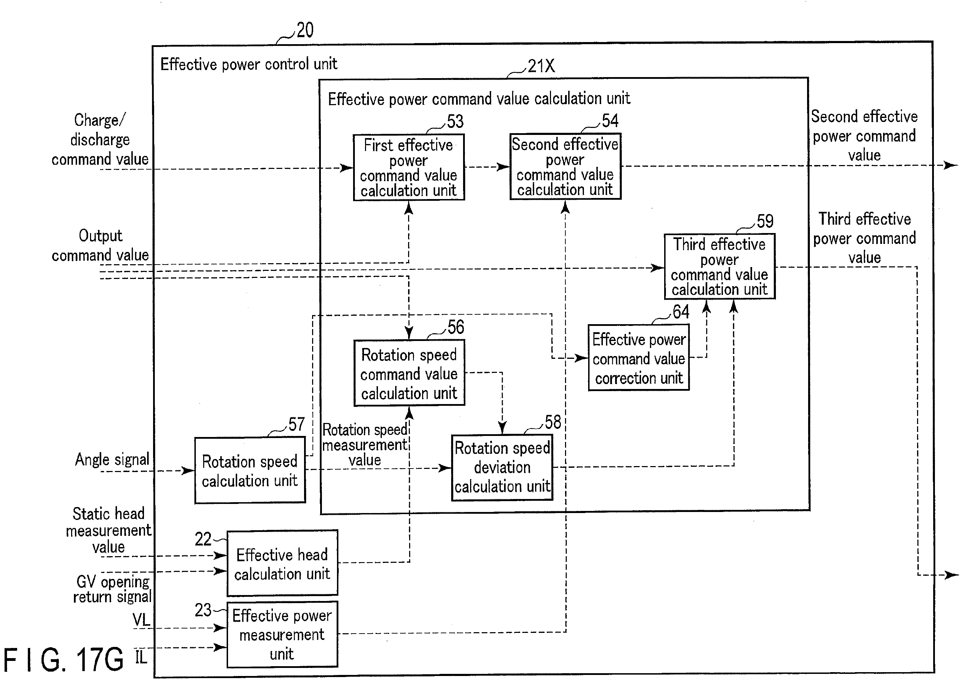

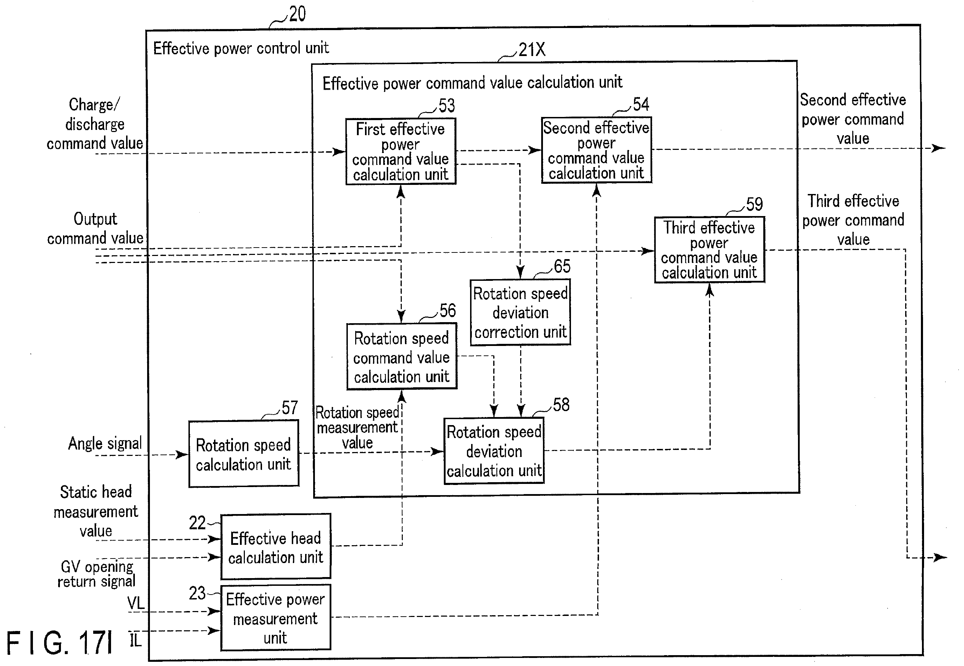

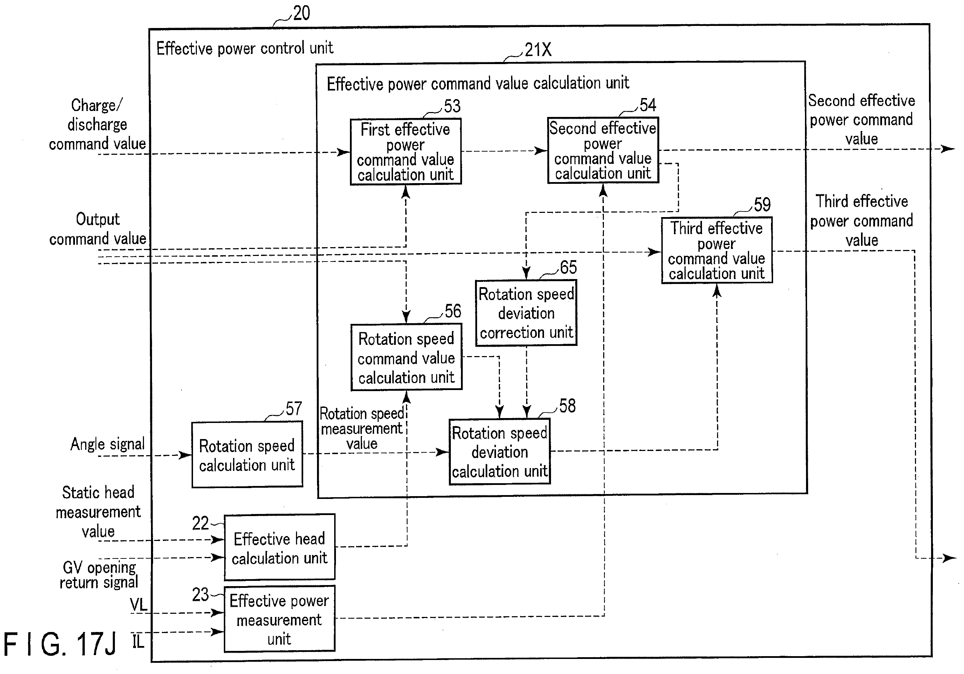

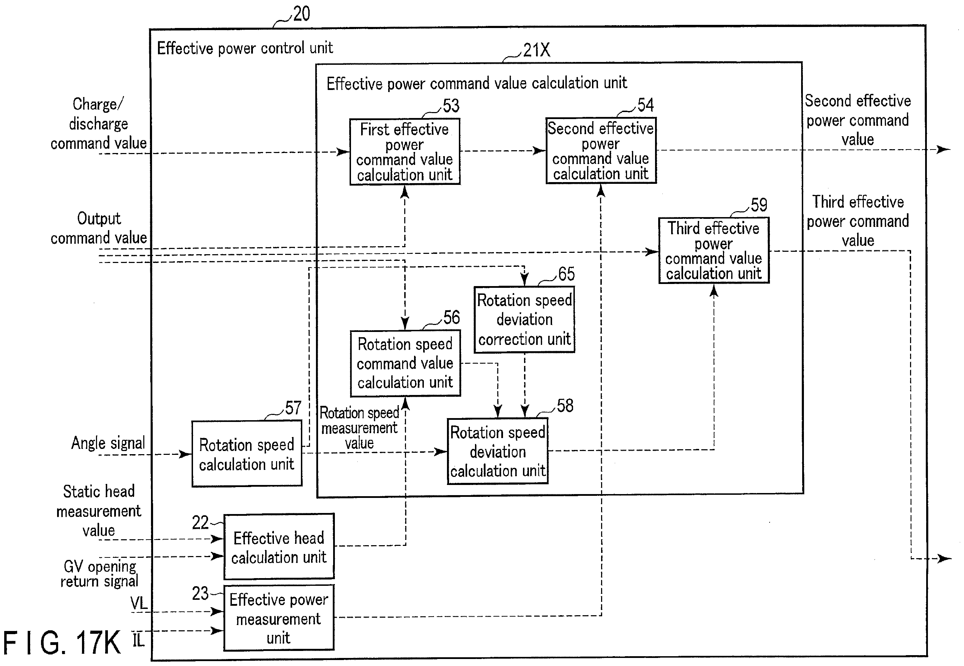

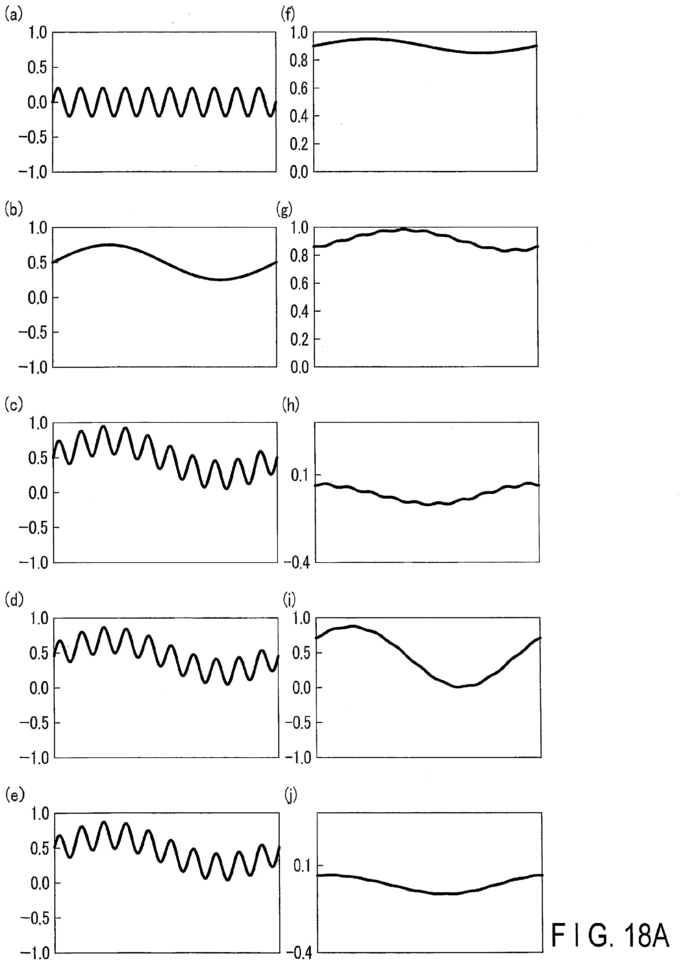

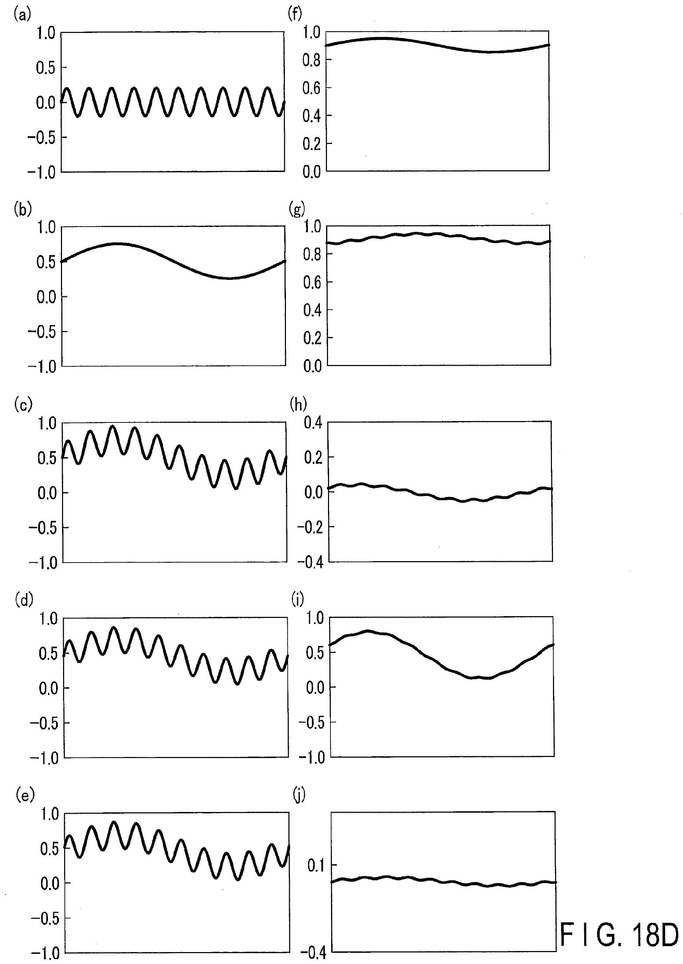

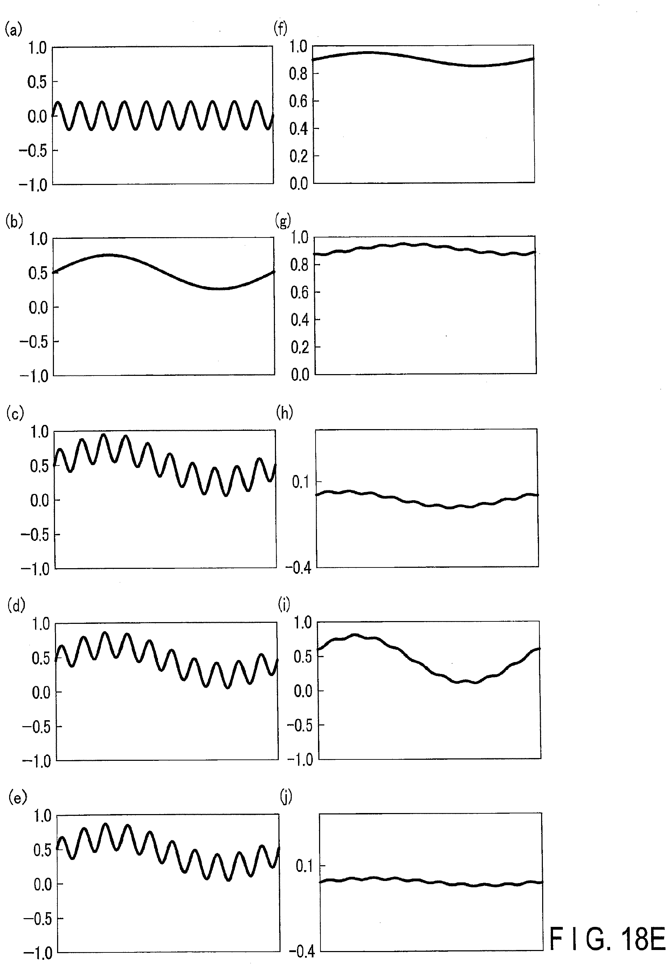

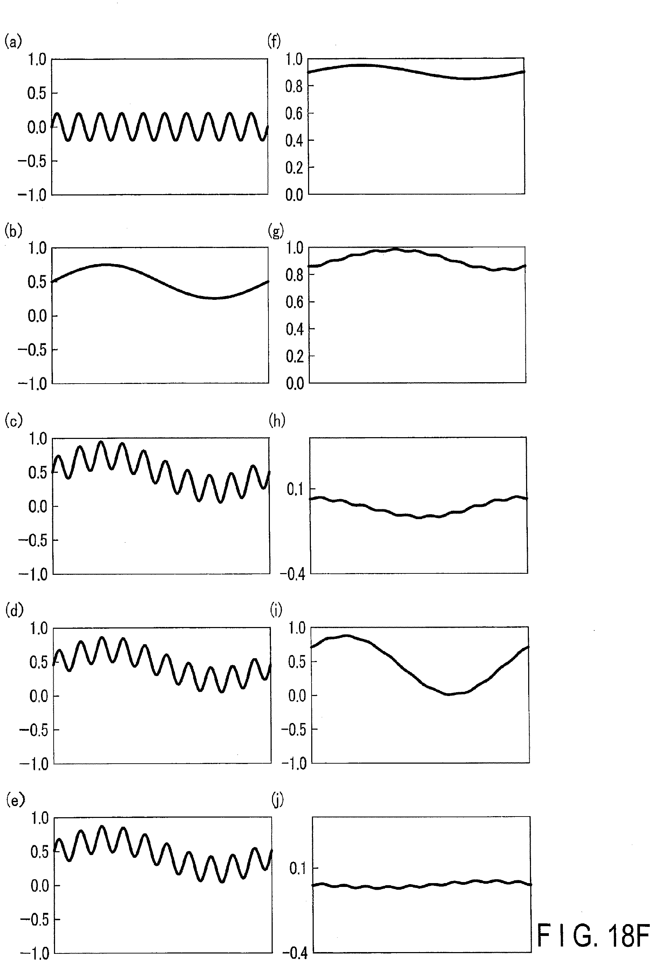

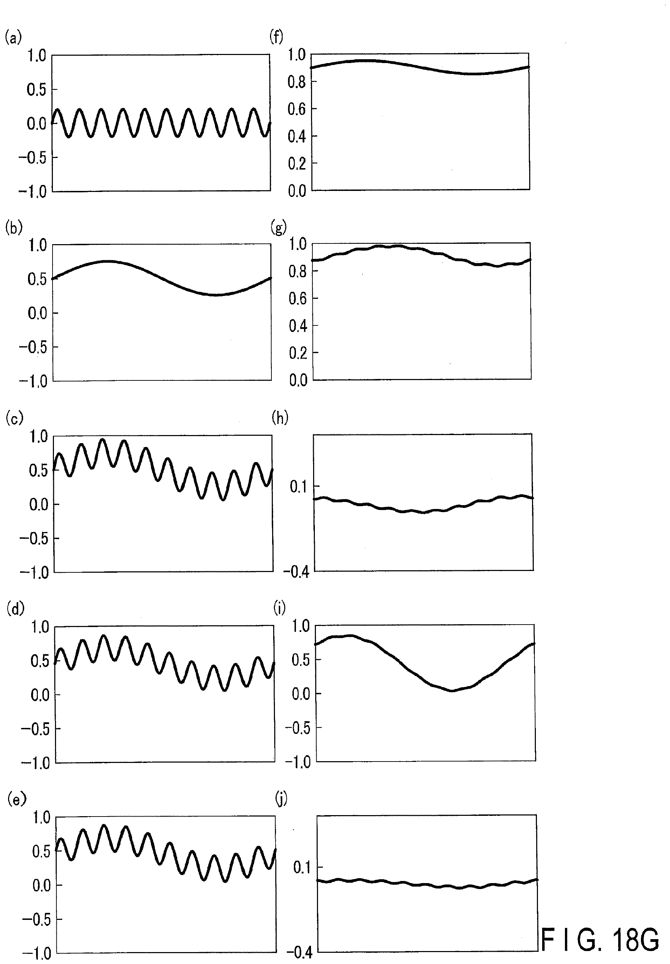

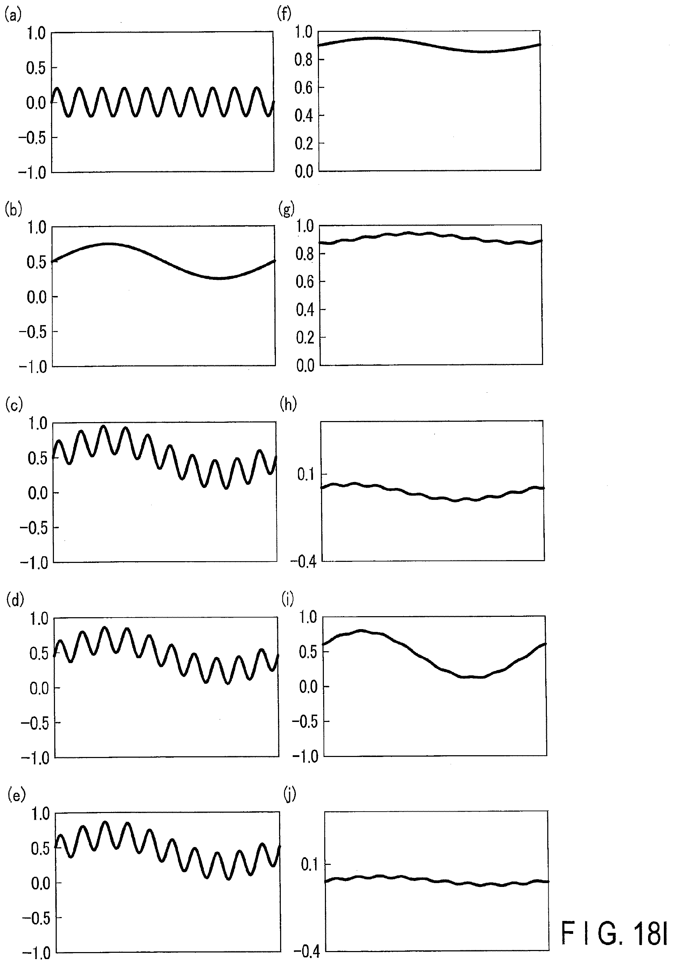

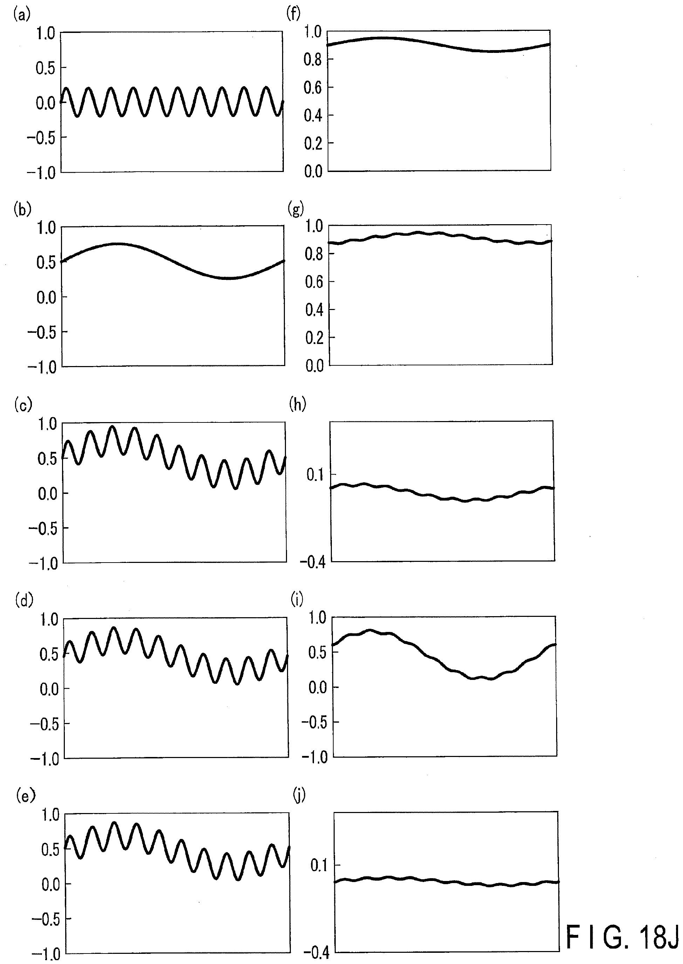

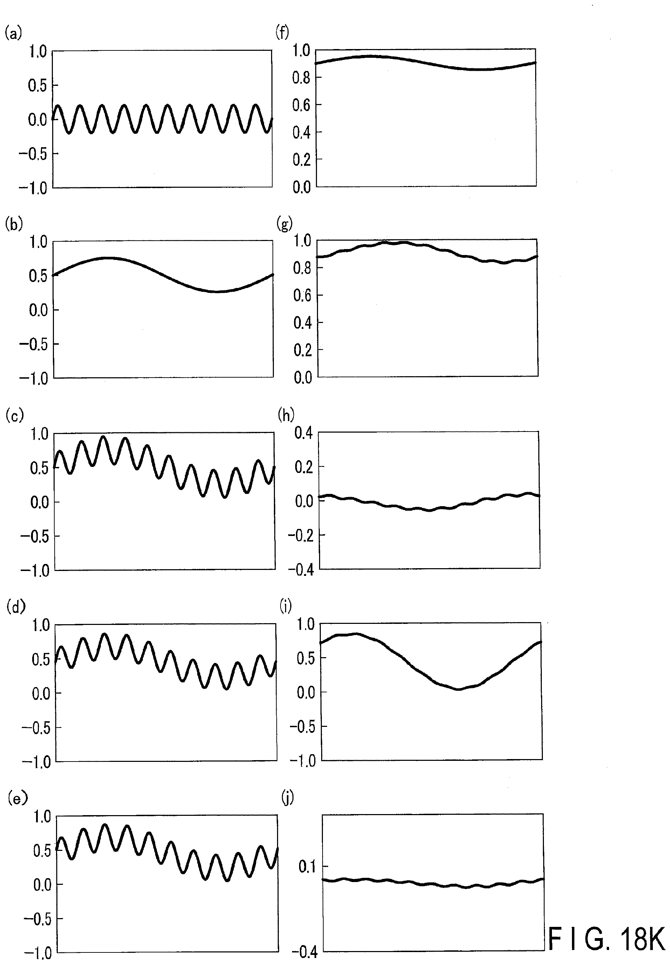

FIG. 17A shows an example of the functional configuration of the effective power control unit 20 according to the first example of the fifth embodiment. In FIG. 17A, the elements having the same functions as those in the effective power control unit 20 according to the third embodiment, which are shown in FIG. 11, are assigned the same reference numerals as those used in the third embodiment. FIG. 18A shows examples of waveforms of signals in the respective units in the effective power command value calculation unit 21X shown in FIG. 17A. However, the waveforms shown in FIG. 18A are waveforms of signals in the respective units shown schematically for easier understanding, and are different from actual waveforms. The signals may also be processed as analog signals and/or digital signals without being converted into waveforms in the effective power command value calculation unit 21X.

The effective power control unit 20 (FIG. 17A) according to the first example of the fifth embodiment differs from the above-described effective power control unit 20 (FIG. 11) according to the third embodiment in that a signal processing unit (signal processing means such as a low-pass filter) 62 is provided on a path connecting the rotation speed deviation calculation unit 58 to the third effective power command value calculation unit 59, and in that the third effective power command value calculation unit 59 receives the output command value and receives a signal output from the signal processing unit 62 as a correction signal for third effective power command value calculation, for example.

Graph (a) of FIG. 18A shows an example of the waveform of the signal of the charge/discharge command value, which is input to the first effective power command value calculation unit 53. Graph (b) of FIG. 18A shows an example of the waveform of the signal of the output command value, which is input to the first effective power command value calculation unit 53, the rotation speed command value calculation unit 56, and the third effective power command value calculation unit 59. Graph (c) of FIG. 18A shows an example of the waveform of the signal of the first effective power command value, which is output from the first effective power command value calculation unit 53 and input to the second effective power command value calculation unit 54.

Graph (d) of FIG. 18A shows an example of the waveform of the signal of the effective power measurement value, which is output from the effective power measurement unit 23 and input to the second effective power command value calculation unit 54. Graph (e) of FIG. 18A shows an example of the waveform of the signal of the second effective power command value, which is output from the second effective power command value calculation unit 54 and supplied to the secondary current command value calculation unit 31 in FIG. 1.

Graph (f) of FIG. 18A shows an example of the waveform of the signal of the rotation speed command value, which is output from the rotation speed command value calculation unit 56 and input to the rotation speed deviation calculation unit 58. Graph (g) of FIG. 18A shows an example of the waveform of the signal of the rotation speed measurement value, which is input from the rotation speed calculation unit 57 to the rotation speed deviation calculation unit 58. Graph (h) of FIG. 18A shows an example of the waveform of the signal of the rotation speed deviation, which is output from the rotation speed deviation calculation unit 58 and input to the signal processing unit 62. Graph (j) of FIG. 18A shows an example of the waveform of the correction signal, which is output from the signal processing unit 62 and input to the third effective power command value calculation unit 59. Graph (i) of FIG. 18A shows an example of the waveform of the signal of the third effective power command value, which is output from the third effective power command value calculation unit 59 and supplied to the governor control command value calculation unit 41 in FIG. 1.

In the first example of the fifth embodiment, the signal processing unit 62 generates a signal obtained by reducing or removing high-frequency components not less than, or higher than, a predetermined frequency (high-frequency components of the rotation speed deviation) from the rotation speed deviation output from the rotation speed deviation calculation unit 58, and outputs the signal as a correction signal (effective power command value correction signal) for correcting the signal generated by the third effective power command value calculation unit 59 (third effective power command value to be supplied to the governor control command value calculation unit 41). The signal processing unit 62 may be implemented using, for example, a low-pass filter or means for calculating a moving average, or may be implemented using other means.

The third effective power command value calculation unit 59 generates a third effective power command value to be supplied to the governor control command value calculation unit 41, using the output command value, corrects the third effective power command value using the signal output from the signal processing unit 62, and outputs the corrected result.

Next, an example of the operation by the effective power command value calculation unit 21X in the effective power control unit 20 shown in FIG. 17A will be described with reference to a flowchart.

The above-described procedures shown in FIGS. 4A to 6 are also applied to the first example of the fifth embodiment. The basic operation of the effective power command value calculation unit 21X according to the first example of the fifth embodiment is the same as that shown in FIG. 4A. The procedure for generating a first effective power command value and the procedure for generating a second effective power command value are the same as those shown in FIGS. 5 and 6.

The procedure for generating a third effective power command value differs from those in the first embodiment to the fourth embodiment.

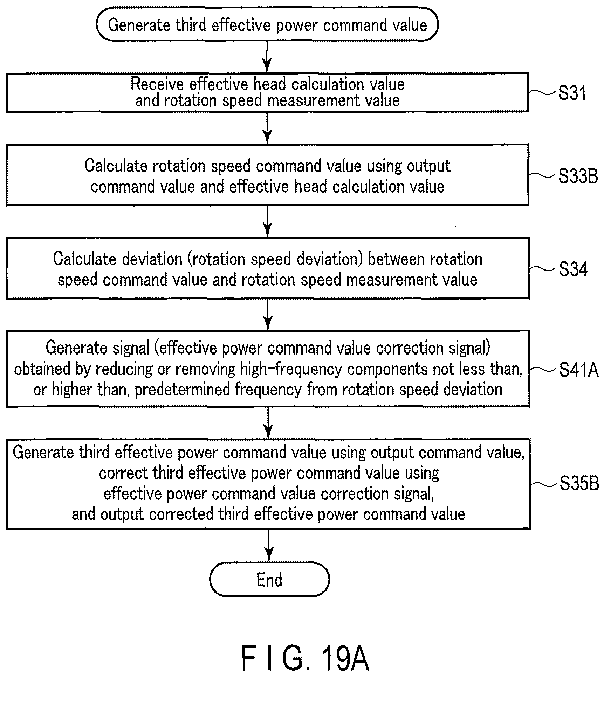

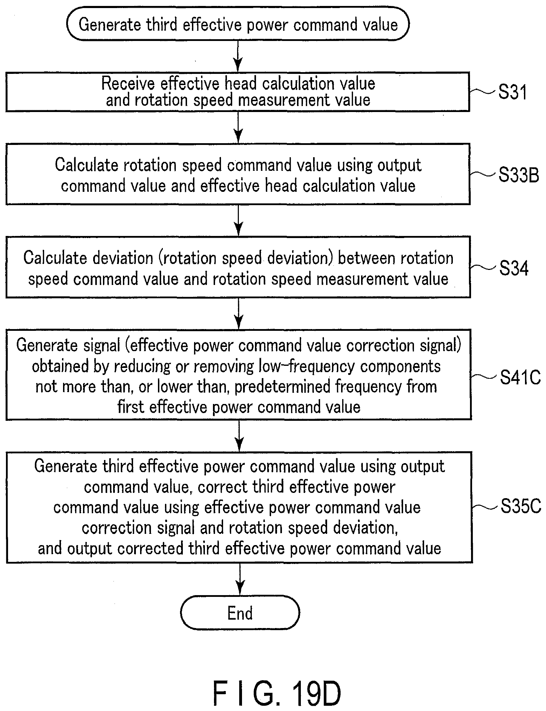

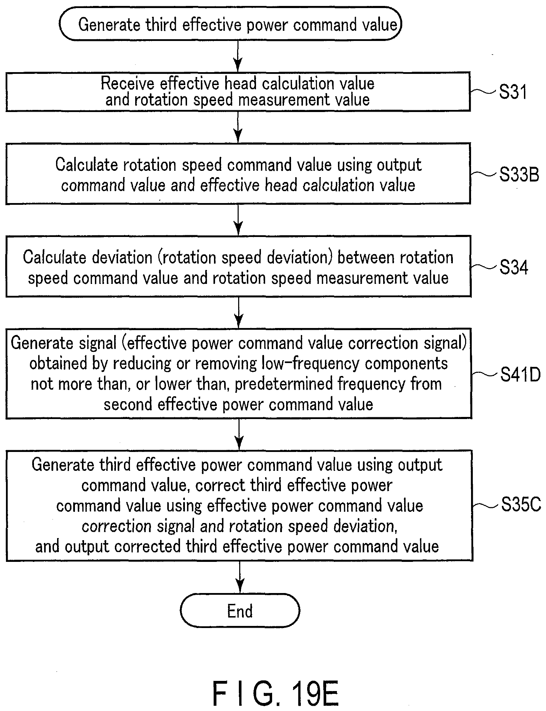

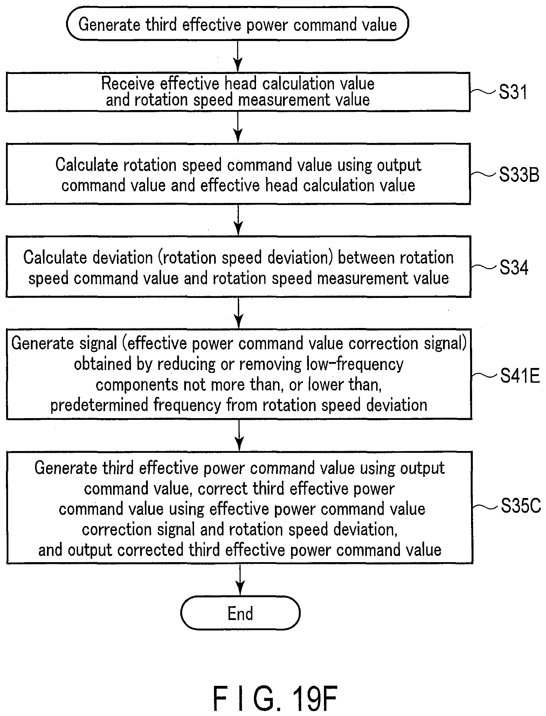

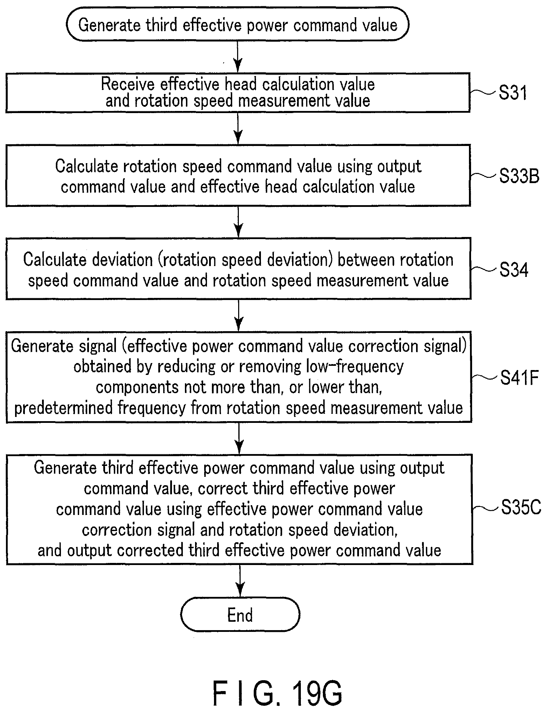

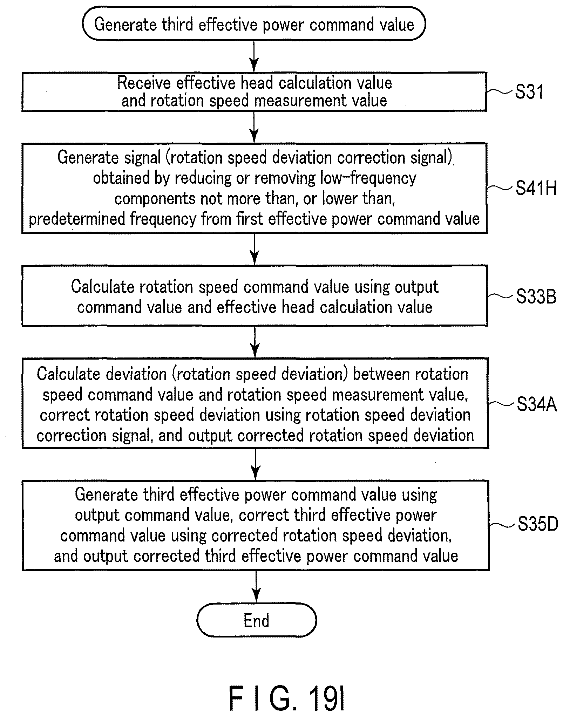

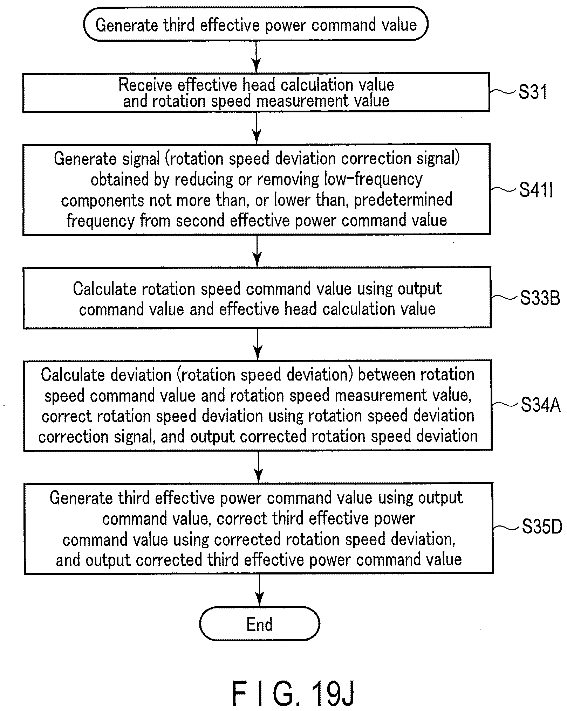

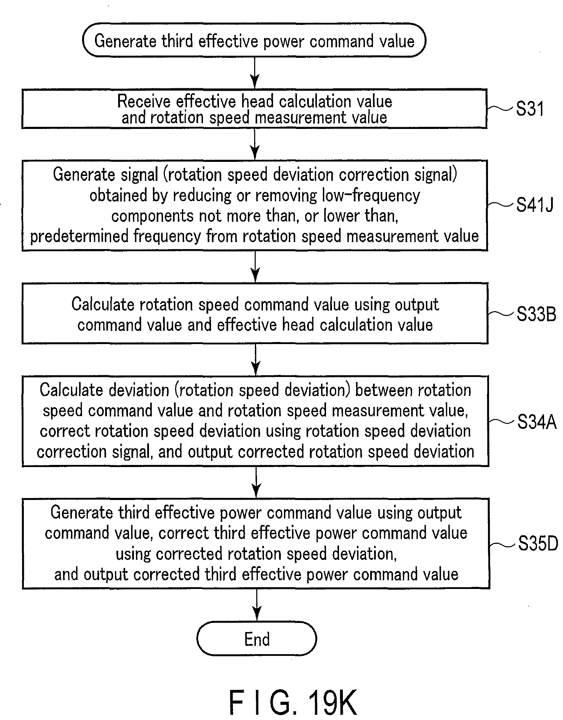

FIG. 19A shows an example of the procedure for generating a third effective power command value according to the first example of the fifth embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then calculates, at the rotation speed command value calculation unit 56, a rotation speed command value for the pump turbine 2 operating as a prime mover, using the output command value and the effective head calculation value output from the effective head calculation unit 22, and outputs the rotation speed command value (step S33B).

The effective power command value calculation unit 21X then compares, at the rotation speed deviation calculation unit 58, the rotation speed command value output from the rotation speed command value calculation unit 56 with the rotation speed measurement value output from the rotation speed calculation unit 57, and calculates and outputs a deviation (rotation speed deviation) between the values (step S34).

The effective power command value calculation unit 21X then generates, at the signal processing unit 62, a signal obtained by reducing or removing high-frequency components not less than, or higher than, a predetermined frequency (high-frequency components of the rotation speed deviation) from the rotation speed deviation output from the rotation speed deviation calculation unit 58, and outputs the signal as an effective power command value correction signal (step S41A).

The effective power command value calculation unit 21X then generates, at the third effective power command value calculation unit 59, a third effective power command value to be supplied to the governor control command value calculation unit 41, using the output command value, corrects the third effective power command value using the effective power command value correction signal output from the signal processing unit 62, and outputs the corrected result (step S35B).

According to the first example of the fifth embodiment, the output command value is directly supplied to the third effective power command value calculation unit 59, corrected with the effective power command value correction signal, and then output as the third effective power command value; therefore, responsivity of control of the third effective power command value can be improved. As in the cases of the fourth embodiment, the operation of the generator motor 3 according to the charge/discharge command value can be implemented, and a third effective power command value with few high-frequency components can be supplied to the governor control command value calculation unit 41; therefore, unnecessary operations (such as an opening/closing operation of the guide vane, which is frequently performed) of the flow adjustment means, which is controlled with the guide vane opening command value, can be reduced, which leads to smaller variation in water pressure of a penstock or the like and longer life of the flow adjustment means.

### [Fifth Embodiment (Second Example)]

Next, a second example of the fifth embodiment will be described. Hereinafter, descriptions of the matters shared with the first example of the fifth embodiment will be omitted, and different matters will mainly be described.

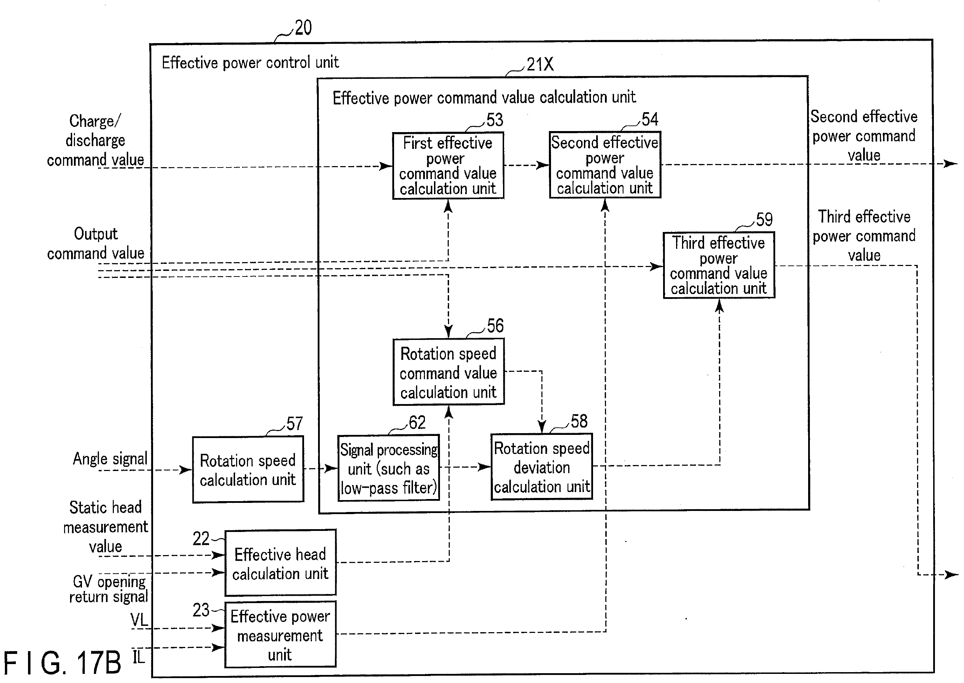

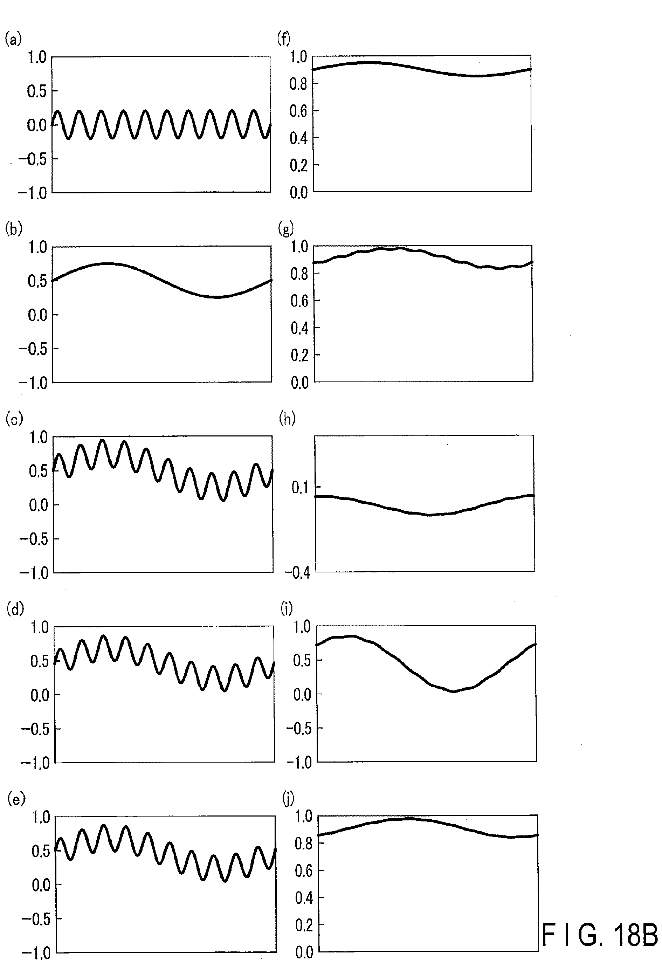

FIG. 17B shows an example of the functional configuration of the effective power control unit 20 according to the second example of the fifth embodiment. FIG. 18B shows examples of waveforms of signals in the respective units in the effective power command value calculation unit 21X shown in FIG. 17B. However, the waveforms shown in FIG. 18B are waveforms of signals in the respective units shown schematically for easier understanding, and are different from actual waveforms. The signals may also be processed as analog signals and/or digital signals without being converted into waveforms in the effective power command value calculation unit 21X.

The case where the signal processing unit (such as a low-pass filter) 62 is provided on the path connecting the rotation speed deviation calculation unit 58 to the third effective power command value calculation unit 59 is described in the first example of the fifth embodiment. In the second example of the fifth embodiment, the signal processing unit (such as a low-pass filter) 62 is provided on the path connecting the rotation speed calculation unit 57 to the rotation speed deviation calculation unit 58. Advantageous effects similar to those of the first example of the fifth embodiment can be attained with this configuration.

Graph (a) of FIG. 18B shows an example of the waveform of the signal of the charge/discharge command value, which is input to the first effective power command value calculation unit 53. Graph (b) of FIG. 18B shows an example of the waveform of the signal of the output command value, which is input to the first effective power command value calculation unit 53, the rotation speed command value calculation unit 56, and the third effective power command value calculation unit 59. Graph (c) of FIG. 18B shows an example of the waveform of the signal of the first effective power command value, which is output from the first effective power command value calculation unit 53 and input to the second effective power command value calculation unit 54.

Graph (d) of FIG. 18B shows an example of the waveform of the signal of the effective power measurement value, which is output from the effective power measurement unit 23 and input to the second effective power command value calculation unit 54. Graph (e) of FIG. 18B shows an example of the waveform of the signal of the second effective power command value, which is output from the second effective power command value calculation unit 54 and supplied to the secondary current command value calculation unit 31 in FIG. 1.

Graph (f) of FIG. 18B shows an example of the waveform of the signal of the rotation speed command value, which is output from the rotation speed command value calculation unit 56 and input to the rotation speed deviation calculation unit 58. Graph (g) of FIG. 18B shows an example of the waveform of the signal of the rotation speed measurement value, which is input from the rotation speed calculation unit 57 to the signal processing unit (such as a low-pass filter) 62. Graph (j) of FIG. 18B shows an example of the waveform of the correction signal, which is output from the signal processing unit 62 and input to the rotation speed deviation calculation unit 58. Graph (h) of FIG. 18B shows an example of the waveform of the signal of the rotation speed deviation, which is output from the rotation speed deviation calculation unit 58 and input to the third effective power command value calculation unit 59. Graph (i) of FIG. 18B shows an example of the waveform of the signal of the third effective power command value, which is output from the third effective power command value calculation unit 59 and supplied to the governor control command value calculation unit 41 in FIG. 1.

In the second example of the fifth embodiment, the signal processing unit 62 generates a signal obtained by reducing or removing high-frequency components not less than, or higher than, a predetermined frequency (high-frequency components of the rotation speed measurement value) from the rotation speed measurement value output from the rotation speed calculation unit 57, and outputs the signal. The signal processing unit 62 is implemented using, for example, a low-pass filter or means for calculating a moving average.

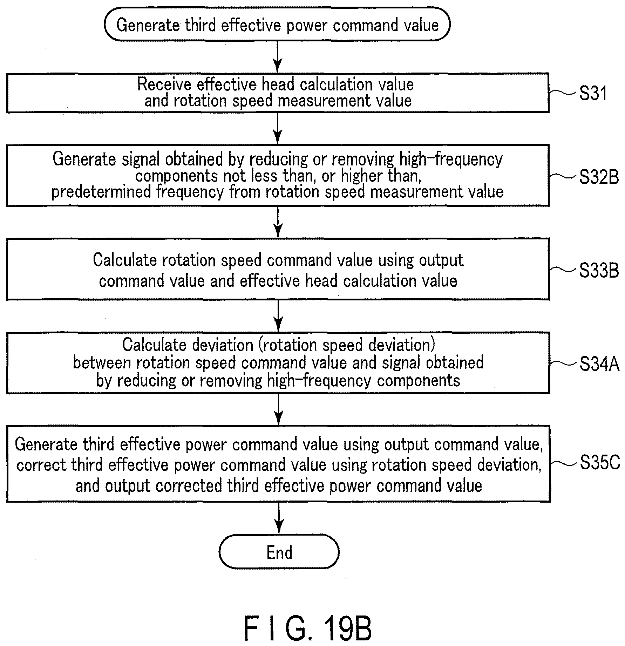

FIG. 19B shows an example of the procedure for generating a third effective power command value according to the second example of the fifth embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then generates, at the signal processing unit (signal processing means such as a low-pass filter) 62, a signal obtained by reducing or removing high-frequency components not less than, or higher than, a predetermined frequency from the rotation speed measurement value output from the rotation speed calculation unit 57 (step S32B).

The effective power command value calculation unit 21X then calculates, at the rotation speed command value calculation unit 56, a rotation speed command value for the pump turbine 2 operating as a prime mover, using the output command value and the effective head calculation value output from the effective head calculation unit 22, and outputs the rotation speed command value (step S33B).

The effective power command value calculation unit 21X then compares, at the rotation speed deviation calculation unit 58, the rotation speed command value output from the rotation speed command value calculation unit 56 with the signal obtained by reducing or removing the high-frequency components and that is output from the signal processing unit 62, and calculates and outputs a deviation (rotation speed deviation) between the value and the signal (step S34A).

The effective power command value calculation unit 21X then generates, at the third effective power command value calculation unit 59, a third effective power command value to be supplied to the governor control command value calculation unit 41, using the output command value, corrects the third effective power command value using the rotation speed deviation output from the rotation speed deviation calculation unit 58, and outputs the corrected result (step S35C).

The second example of the fifth embodiment can produce advantageous effects similar to those of the first example of the fifth embodiment.

### [Fifth Embodiment (Third to Seventh Examples)]

Next, third to seventh examples of the fifth embodiment will be described. Hereinafter, descriptions of the matters shared with the third embodiment will be omitted, and different matters will be mainly described.

The above-described configuration shown in FIG. 1 is also applied to the third to seventh examples of the fifth embodiment. The basic configuration of the electric power control device 100 according to each of the third to seventh examples of the fifth embodiment is the same as that shown in FIG. 1.

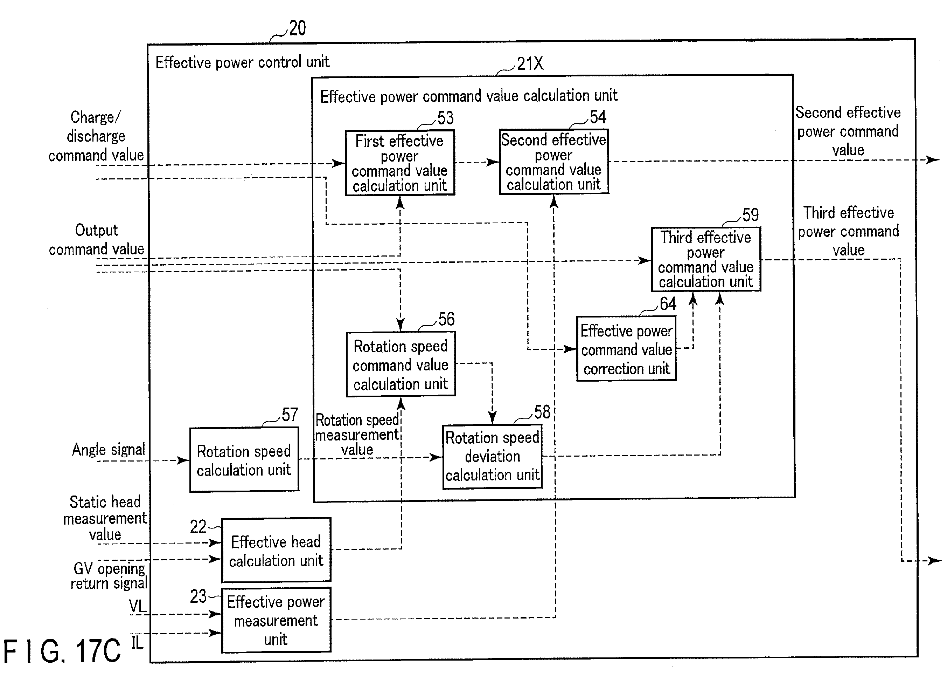

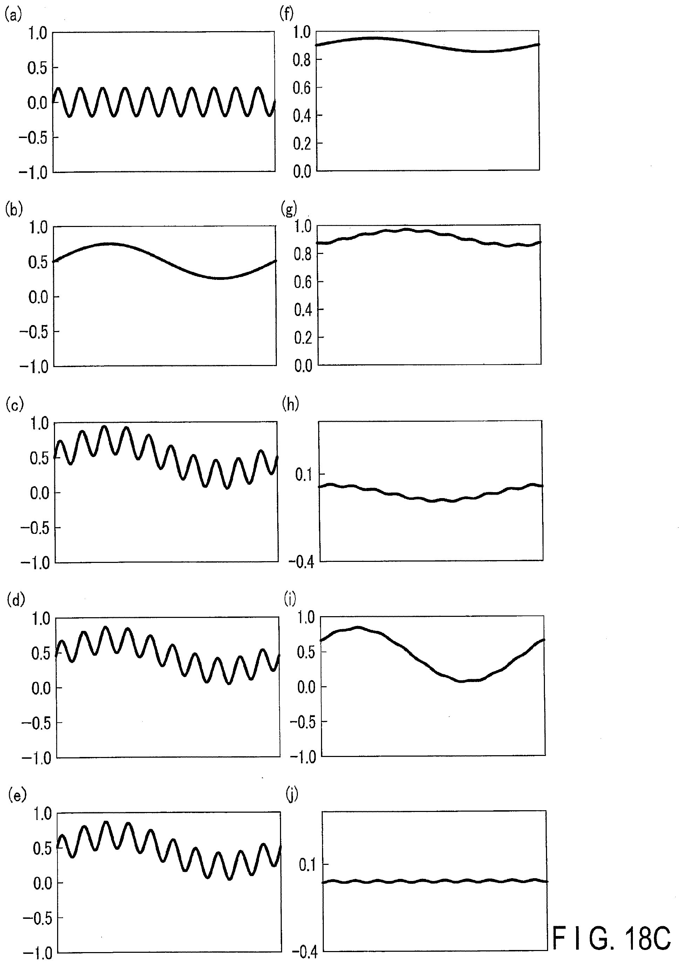

FIGS. 17C to 17G show respective examples of the functional configurations of the effective power control units 20 according to the third to seventh examples of the fifth embodiment. In FIGS. 17C to 17G, the elements having the same functions as those in the effective power control unit 20 according to the third embodiment, which are shown in FIG. 11, are assigned the same reference numerals as those used in the third embodiment. FIGS. 18C to 18G briefly show examples of waveforms of signals in the respective units in the effective power command value calculation units 21X shown in FIGS. 17C to 17G. However, the waveforms shown in FIGS. 18C to 18G are waveforms of signals in the respective units shown schematically for easier understanding, and are different from actual waveforms. The signals may also be processed as analog signals and/or digital signals without being converted into waveforms in the effective power command value calculation unit 21X.

The effective power control units 20 (FIGS. 17C to 17G) according to the third to seventh examples of the fifth embodiment differ from the above-described effective power control unit 20 (FIG. 17A) according to the first example of the fifth embodiment in that an effective power command value correction unit 64 is provided on respective paths connecting a part of the effective power control unit 20 which receives the charge/discharge command value, the first effective power command value calculation unit 53, the second effective power command value calculation unit 54, the rotation speed deviation calculation unit 58, and the rotation speed calculation unit 57 to the third effective power command value calculation unit 59.

Graph (a) of each of FIGS. 18C to 18G shows an example of the waveform of the signal of the charge/discharge command value, which is input to the first effective power command value calculation unit 53. Graph (b) of each of FIGS. 18C to 18G shows an example of the waveform of the signal of the output command value, which is input to the first effective power command value calculation unit 53, the rotation speed command value calculation unit 56, and the third effective power command value calculation unit 59. Graph (c) of each of FIGS. 18C to 18G shows an example of the waveform of the signal of the first effective power command value, which is output from the first effective power command value calculation unit 53 and input to the second effective power command value calculation unit 54.

Graph (d) of each of FIGS. 18C to 18G shows an example of the waveform of the signal of the effective power measurement value, which is output from the effective power measurement unit 23 and input to the second effective power command value calculation unit 54. Graph (e) of each of FIGS. 18C to 18G shows an example of the waveform of the signal of the second effective power command value, which is output from the second effective power command value calculation unit 54 and supplied to the secondary current command value calculation unit 31 in FIG. 1.

Graph (f) of each of FIGS. 18C to 18G shows an example of the waveform of the signal of the rotation speed command value, which is output from the rotation speed command value calculation unit 56 and input to the rotation speed deviation calculation unit 58. Graph (g) of each of FIGS. 18C to 18G shows an example of the waveform of the signal of the rotation speed measurement value, which is input from the rotation speed calculation unit 57 to the rotation speed deviation calculation unit 58. Graph (h) of each of FIGS. 18C to 18G shows an example of the waveform of the signal of the rotation speed deviation, which is output from the rotation speed deviation calculation unit 58 and input to the third effective power command value calculation unit 59. Graph (j) of each of FIGS. 18C to 18G shows an example of the waveform of the correction signal, which is output from the effective power command value correction unit 64 and input to the third effective power command value calculation unit 59. Graph (i) of each of FIGS. 18C to 18G shows an example of the waveform of the signal of the third effective power command value, which is output from the third effective power command value calculation unit 59 and supplied to the governor control command value calculation unit 41 in FIG. 1.

In the third to seventh examples of the fifth embodiment, the effective power command value correction unit 64 outputs an effective power command value correction signal calculated from the signal of the charge/discharge command value or the signal output from the first effective power command value calculation unit 53, the second effective power command value calculation unit 54, the rotation speed deviation calculation unit 58, or the rotation speed calculation unit 57 as a correction signal (effective power command value correction signal) for correcting the signal generated by the third effective power command value calculation unit 59 (third effective power command value to be supplied to the governor control command value calculation unit 41). The effective power command value correction unit 64 may be implemented using, for example, a high-pass filter or may be implemented using other means.

The third effective power command value calculation unit 59 generates a third effective power command value to be supplied to the governor control command value calculation unit 41, using the output command value, corrects the third effective power command value using the effective power command value correction signal output from the effective power command value correction unit 64 and the rotation speed deviation signal output from the rotation speed deviation calculation unit 58, and outputs the corrected result.

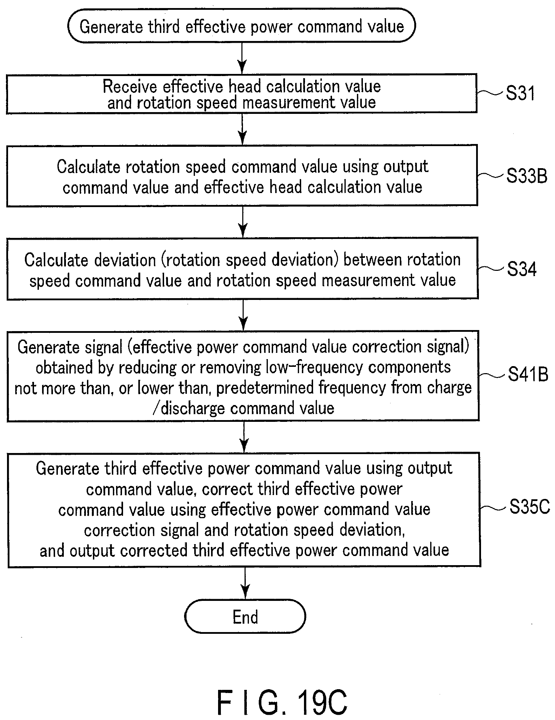

FIGS. 19C to 19G show respective examples of the procedures for generating a third effective power command value according to the third to seventh examples of the fifth embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then calculates, at the rotation speed command value calculation unit 56, a rotation speed command value for the pump turbine 2 operating as a prime mover, using the output command value and the effective head calculation value output from the effective head calculation unit 22, and outputs the rotation speed command value (step S33B).

The effective power command value calculation unit 21X then compares, at the rotation speed deviation calculation unit 58, the rotation speed command value output from the rotation speed command value calculation unit 56 with the rotation speed measurement value output from the rotation speed calculation unit 57, and calculates and outputs a deviation (rotation speed deviation) between the values (step S34).

The effective power command value calculation unit 21X then generates, at the effective power command value correction unit 64, a signal obtained by reducing or removing low-frequency components not more than, or lower than, a predetermined frequency from the charge/discharge command value, the first effective power command value output from the first effective power command value calculation unit 53, the second effective power command value output from the second effective power command value calculation unit 54, the rotation speed deviation output from the rotation speed deviation calculation unit 58, or the rotation speed measurement value output from the rotation speed calculation unit 57, and outputs the signal as an effective power command value correction signal (step S41B, S41C, S41D, S41E, or S41F).

The effective power command value calculation unit 21X then generates, at the third effective power command value calculation unit 59, a third effective power command value to be supplied to the governor control command value calculation unit 41, using the output command value, corrects the third effective power command value using the effective power command value correction signal output from the effective power command value correction unit 64 and the rotation speed deviation signal output from the rotation speed deviation calculation unit 58, and outputs the corrected result (step S35C).

According to the third to seventh examples of the fifth embodiment, the output command value is directly supplied to the third effective power command value calculation unit 59, corrected with the effective power command value correction signal, and then output as the third effective power command value; therefore, control responsivity can be improved. As in the cases of the fourth embodiment, the operation of the generator motor 3 according to the charge/discharge command value can be implemented, and a third effective power command value with few high-frequency components can be supplied to the governor control command value calculation unit 41; therefore, unnecessary operations (such as an opening/closing operation of the guide vane, which is frequently performed) of the flow adjustment means, which is controlled with the guide vane opening command value, can be reduced, which leads to smaller variation in water pressure of a penstock or the like and longer life of the flow adjustment means.

### [Fifth Embodiment (Eighth to Eleventh Examples)]

Next, eighth to eleventh examples of the fifth embodiment will be described. Hereinafter, descriptions of the matters shared with the third to seventh examples of the fifth embodiment will be omitted, and different matters will be mainly described.

The above-described configuration shown in FIG. 1 is also applied to the eighth to eleventh examples of the fifth embodiment. The basic configuration of the electric power control device 100 according to each of the eighth to eleventh examples of the fifth embodiment is the same as that shown in FIG. 1.

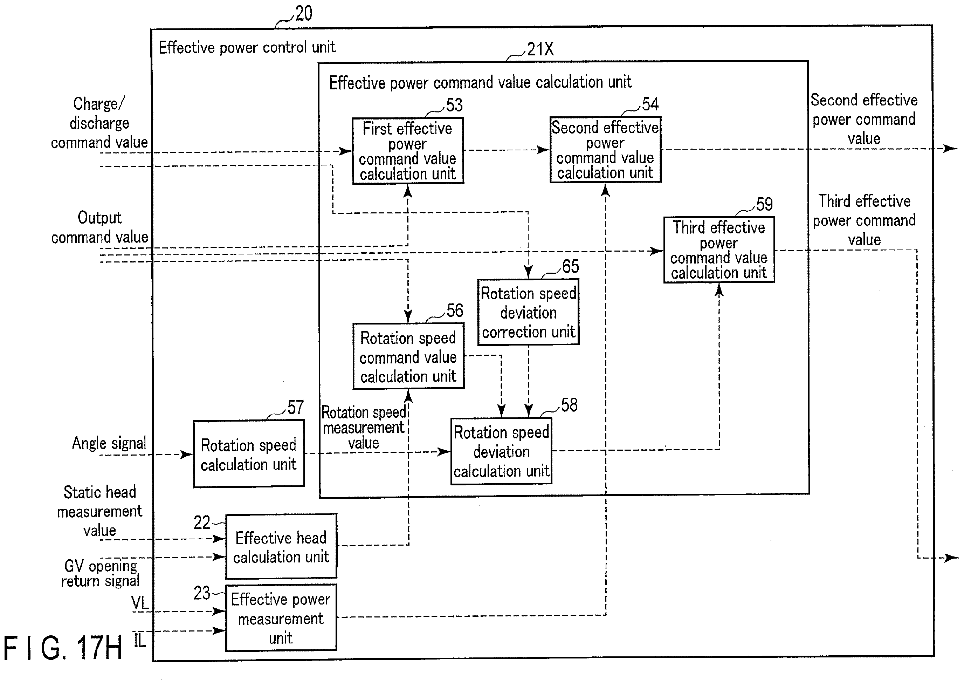

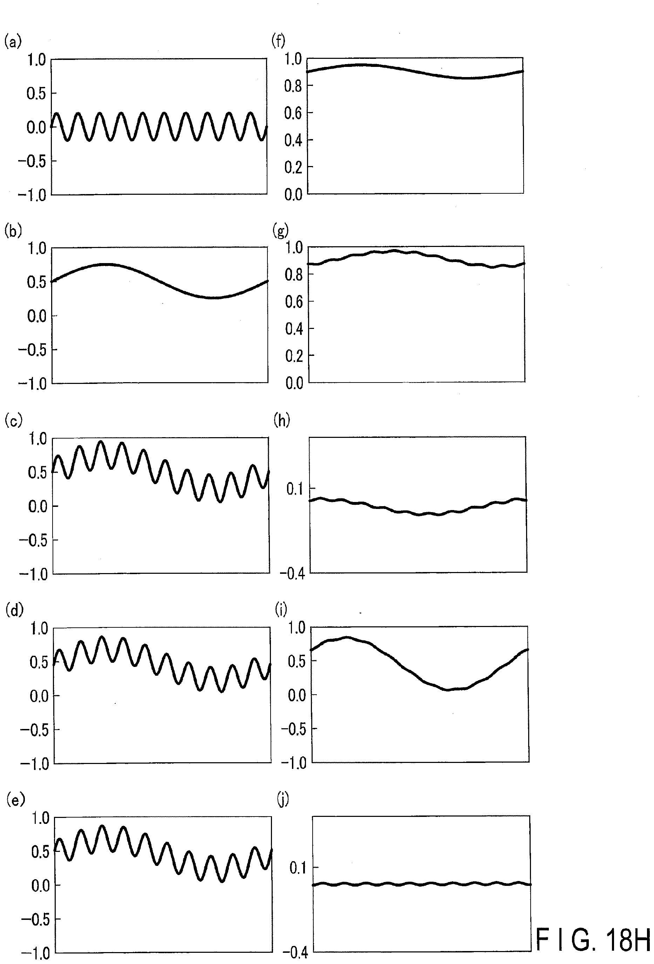

FIGS. 17H to 17K show respective examples of the functional configurations of the effective power control units 20 according to the eighth to eleventh examples of the fifth embodiment. In FIGS. 17H to 17K, the elements having the same functions as those in the effective power control unit 20 according to the third embodiment, which are shown in FIG. 11, are assigned the same reference numerals as those used in the third embodiment. FIGS. 18H to 18K briefly show examples of waveforms of signals in the respective units in the effective power command value calculation units 21X shown in FIGS. 17H to 17K. However, the waveforms shown in FIGS. 18H to 18K are waveforms of signals in the respective units shown schematically for easier understanding, and are different from actual waveforms. The signals may also be processed as analog signals and/or digital signals without being converted into waveforms in the effective power command value calculation unit 21X.

The effective power control units 20 (FIGS. 17H to 17K) according to the eighth to eleventh examples of the fifth embodiment differ from the above-described effective power control units 20 (FIGS. 17C to 17G) according to the third to seventh examples of the fifth embodiment in that, instead of the effective power command value correction unit 64, a rotation speed deviation correction unit 65 is provided, and the output of the rotation speed deviation correction unit 65 is input to the rotation speed deviation calculation unit 58.

Graph (a) of each of FIGS. 18H to 18K shows an example of the waveform of the signal of the charge/discharge command value, which is input to the first effective power command value calculation unit 53. Graph (b) of each of FIGS. 18H to 18K shows an example of the waveform of the signal of the output command value, which is input to the first effective power command value calculation unit 53, the rotation speed command value calculation unit 56, and the third effective power command value calculation unit 59. Graph (c) of each of FIGS. 18H to 18K shows an example of the waveform of the signal of the first effective power command value, which is output from the first effective power command value calculation unit 53 and input to the second effective power command value calculation unit 54.

Graph (d) of each of FIGS. 18H to 18K shows an example of the waveform of the signal of the effective power measurement value, which is output from the effective power measurement unit 23 and input to the second effective power command value calculation unit 54. Graph (e) of each of FIGS. 18H to 18K shows an example of the waveform of the signal of the second effective power command value, which is output from the second effective power command value calculation unit 54 and supplied to the secondary current command value calculation unit 31 in FIG. 1.

Graph (f) of each of FIGS. 18H to 18K shows an example of the waveform of the signal of the rotation speed command value, which is output from the rotation speed command value calculation unit 56 and input to the rotation speed deviation calculation unit 58. Graph (g) of each of FIGS. 18H to 18K shows an example of the waveform of the signal of the rotation speed measurement value, which is input from the rotation speed calculation unit 57 to the rotation speed deviation calculation unit 58. Graph (h) of each of FIGS. 18H to 18K shows an example of the waveform of the signal of the rotation speed deviation, which is output from the rotation speed deviation calculation unit 58 and input to the third effective power command value calculation unit 59. Graph (j) of each of FIGS. 18H to 18K shows an example of the waveform of the correction signal, which is output from the rotation speed deviation correction unit 65 and input to the rotation speed deviation calculation unit 58. Graph (i) of each of FIGS. 18H to 18K shows an example of the waveform of the signal of the third effective power command value, which is output from the third effective power command value calculation unit 59 and supplied to the governor control command value calculation unit 41 in FIG. 1.

In the eighth to eleventh examples of the fifth embodiment, the rotation speed deviation correction unit 65 generates a signal obtained by reducing or removing low-frequency components not more than, or lower than, a predetermined frequency from the signal of the charge/discharge command value or the signal output from the first effective power command value calculation unit 53, the second effective power command value calculation unit 54, or the rotation speed calculation unit 57, and outputs the signal as a correction signal (rotation speed deviation correction signal) for correcting the signal generated by the rotation speed deviation calculation unit 58 (rotation speed deviation signal to be supplied to the third effective power command value calculation unit 59). The rotation speed deviation correction unit 65 may be implemented using, for example, a high-pass filter or may be implemented using means other than the high-pass filter.

The rotation speed deviation calculation unit 58 generates a rotation speed deviation signal to be supplied to the third effective power command value calculation unit 59, using the rotation speed command value output from the rotation speed command value calculation unit 56 and the rotation speed measurement value output from the rotation speed calculation unit 57, corrects the rotation speed deviation signal using the rotation speed deviation correction signal output from the rotation speed deviation correction unit 65, and outputs the corrected result.

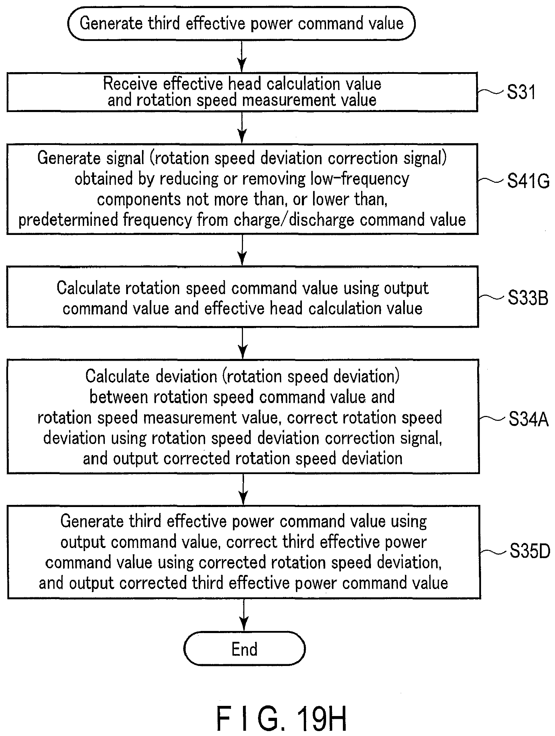

FIGS. 19H to 19K show respective examples of the procedures for generating a third effective power command value according to the eighth to eleventh examples of the fifth embodiment. The steps for generating a third effective power command value need not necessarily be performed in the order of the step numbers described herein. Some steps may be performed in a different order or performed simultaneously.

The effective power command value calculation unit 21X receives an effective head (effective head calculation value) calculated and output by the effective head calculation unit 22, and receives a rotation speed measurement value calculated and output by the rotation speed calculation unit 57 (step S31).

The effective power command value calculation unit 21X then generates, at the rotation speed deviation correction unit 65, a signal obtained by reducing or removing low-frequency components not more than, or lower than, a predetermined frequency from the charge/discharge command value, the first effective power command value output from the first effective power command value calculation unit 53, the second effective power command value output from the second effective power command value calculation unit 54, or the rotation speed measurement value output from the rotation speed calculation unit 57, and outputs the signal as the rotation speed deviation correction signal (step S41G, S41H, S41I, or S41J).

The effective power command value calculation unit 21X then calculates, at the rotation speed command value calculation unit 56, a rotation speed command value for the pump turbine 2 operating as a prime mover, using the output command value and the effective head calculation value output from the effective head calculation unit 22, and outputs the rotation speed command value (step S33B).

The effective power command value calculation unit 21X then compares, at the rotation speed deviation calculation unit 58, the rotation speed command value output from the rotation speed command value calculation unit 56 with the rotation speed measurement value output from the rotation speed calculation unit 57, calculates a deviation (rotation speed deviation) between the values, corrects the rotation speed deviation using the rotation speed deviation correction signal output from the rotation speed deviation correction unit 65, and outputs the corrected rotation speed deviation (step S34A).

The effective power command value calculation unit 21X then generates, at the third effective power command value calculation unit 59, a third effective power command value to be supplied to the governor control command value calculation unit 41, using the output command value, corrects the third effective power command value using the corrected rotation speed deviation output from the rotation speed deviation calculation unit 58, and outputs the corrected result (step S35D).

According to the eighth to eleventh examples of the fifth embodiment, the output command value is directly supplied to the third effective power command value calculation unit 59, corrected with the effective power command value correction signal (rotation speed deviation signal corrected by the rotation speed deviation correction signal), and then output as the third effective power command value; therefore, control responsivity can be improved. As in the cases of the fourth embodiment, the operation of the generator motor 3 according to the charge/discharge command value can be implemented, and a third effective power command value with few high-frequency components can be supplied to the governor control command value calculation unit 41; therefore, unnecessary operations (such as an opening/closing operation of the guide vane, which is frequently performed) of the flow adjustment means, which is controlled with the guide vane opening command value, can be reduced, which leads to smaller variation in water pressure of a penstock or the like and longer life of the flow adjustment means.

### [Others]

Described in the first to fifth embodiments as examples are the cases where the secondary current command value calculation unit 31 and the governor control command value calculation unit 41 are provided in the electric power control device 100; however, the invention is not limited to such cases. For example, the secondary current command value calculation unit 31 may be provided outside the electric power control device 100 (such as in the secondary exciter 8), and the governor control command value calculation unit 41 may be provided outside the electric power control device 100 (such as in the governor 10).

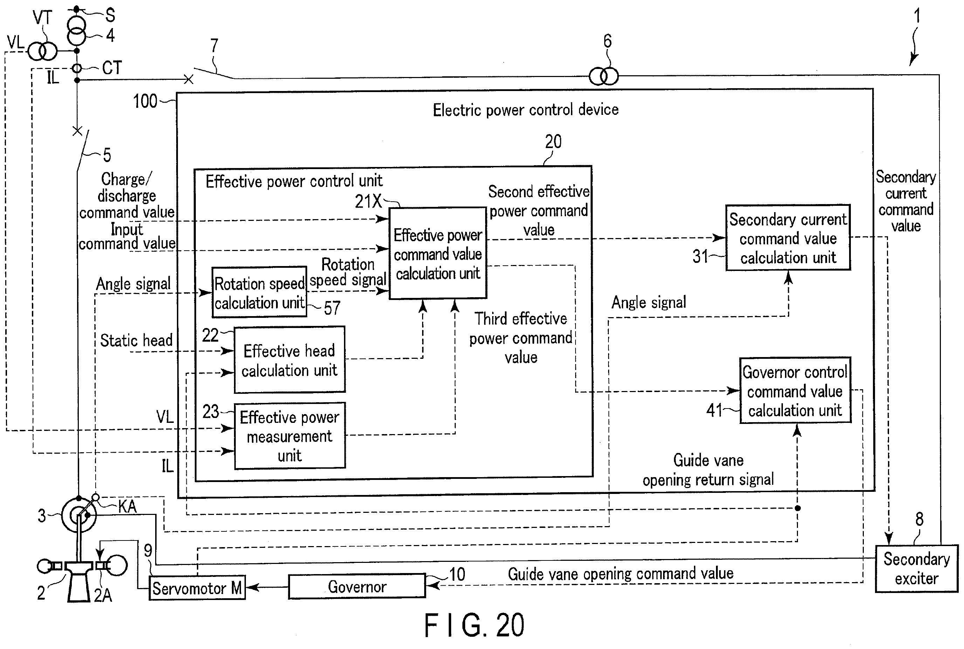

Described in the first to fifth embodiments are the cases where the electric power control device 100 in FIG. 1 performs control by receiving an "output command value" (command value of power output); however, in pumping operation of a pumped-storage power plant or a pumping plant, the electric power control device 100 can perform control by receiving an "input command value" (command value of pumping input) as shown in FIG. 20. For the configurations and operations of the respective units in the electric power control device 100 in such a case, the descriptions of the first to fifth embodiments should be read with the "output command value" replaced with the "input command value". Even in such a case, advantageous effects similar to those described above can be attained.

The cases where the secondary current of the secondary exciter is controlled are described in the first to fifth embodiments; however, a secondary voltage command value calculation unit may be provided instead of the secondary current command value calculation unit, and a secondary voltage may be controlled instead of the secondary current.

The cases where the power converter is connected to the secondary winding side of the generator motor are described in the first to fifth embodiments; however, the electric power control device and electric power control method according to the present invention can be applied to cases where the power converter is connected to the primary winding side of the generator motor. When the power converter is connected to the primary side of the generator motor, the second effective power command value is input to a power conversion control command value calculation unit, and the power conversion control command value calculation unit outputs a power conversion control command value to the power converter, as will be described later.

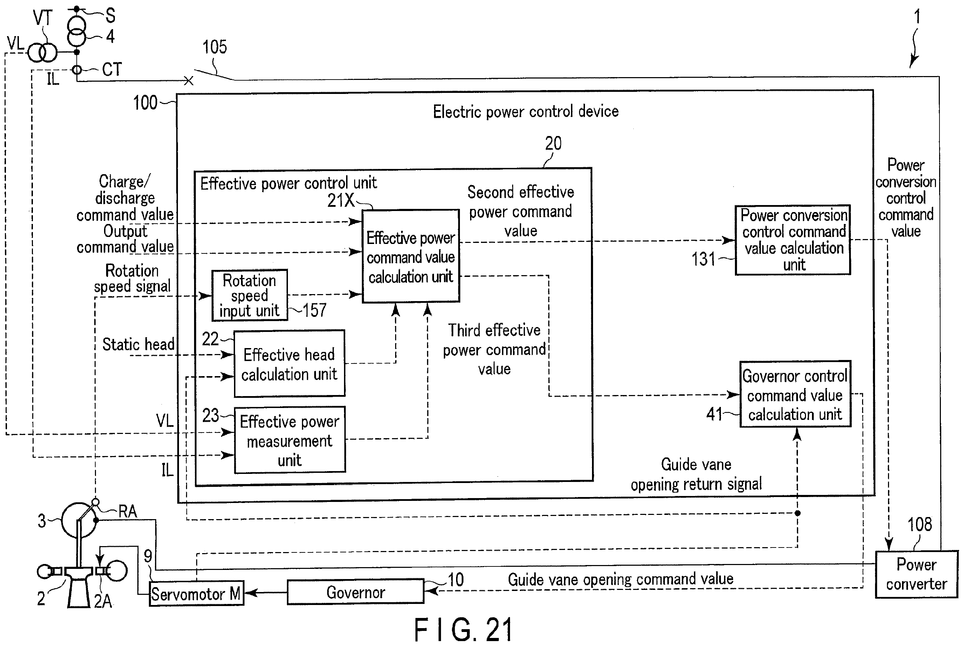

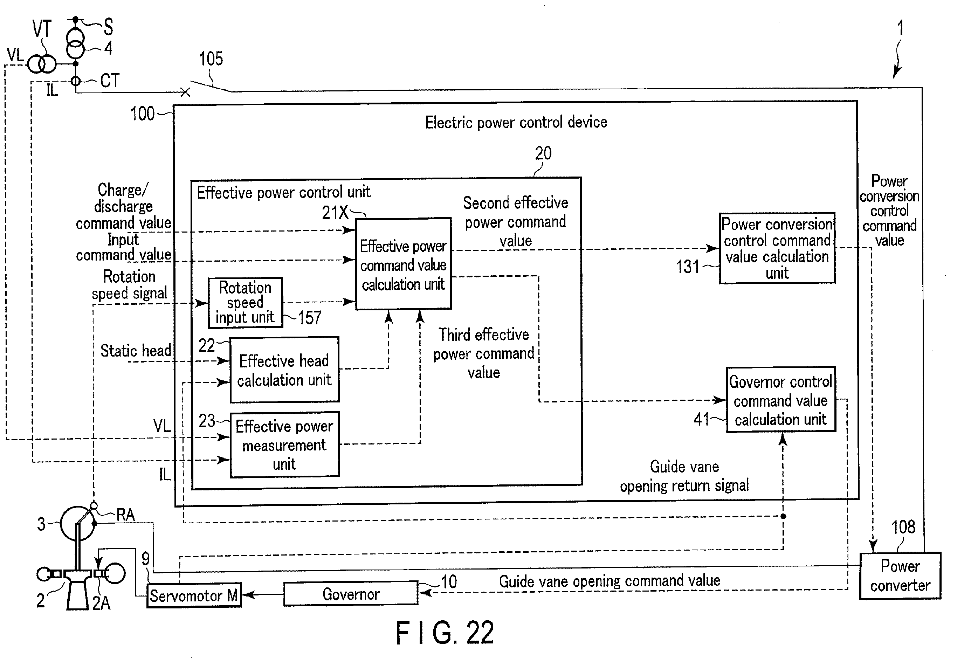

The cases of a pumped-storage power plant of a secondary excitation type are described in the first to fifth embodiments; however, the present invention can be applied to a pumped-storage power plant of a full-converter type. FIGS. 21 and 22 show modifications (examples of a pumped-storage power plant of full-converter type) of the configurations of the pumped-storage power plants shown in FIGS. 1 and 20, in which the power conversion means is connected to the "primary side", "stator side", or "armature side", not the "secondary side", of the generator motor.

In the modifications in FIGS. 21 and 22, instead of the secondary exciter 8 connected to the primary side of the generator motor 3, a power converter 108 connected to the primary side, stator side, or armature side of the generator motor 3 is provided. In addition, instead of the excitation transformer 6 and the excitation breaker 7, a breaker 105 is provided. Moreover, instead of the rotation angle detector KA, a rotation speed detector RA is provided. In the electric power control device 100, instead of the rotation speed calculation unit 57, a rotation speed input unit 157 is provided in the effective power control unit 20, and the rotation speed input unit 157 receives a rotation speed signal output from the rotation speed detector RA, and supplies the rotation speed signal to the effective power command value calculation unit 21X. In addition, instead of the secondary current command value calculation unit 31, a power conversion control command value calculation unit 131 is provided. The power conversion control command value calculation unit 131 calculates a power conversion control command value to be provided to the power converter 108, using the second effective power command value supplied from the effective power command value calculation unit 21X, and outputs the power conversion control command value.

The cases where the invention is applied to a plant utilizing hydraulic power are described in the first to fifth embodiments and modifications in FIGS. 21 and 22 as examples; however, the invention can be applied to a plant that can perform adjustable-speed operation utilizing energy of a substance other than water. In that case, the mechanism controlled by the governor 10 is not a guide vane, but a valve or nozzle that adjusts the amount of a substance such as a working fluid, fuel, air-fuel mixture, or a substance to be mixed with a fuel. Accordingly, substance amount adjustment means for adjusting the amount of a substance is applied instead of the flow adjustment means for adjusting water flow. In addition, the prime mover is not a pump turbine or a waterwheel, but another prime mover (such as a steam turbine, a gas turbine, or an engine). The working fluid is not water, but steam, carbon dioxide, ammonia, or the like. The fuel is natural gas, gasoline, light fuel oil, heavy fuel oil, coal, or the like. The substance mixed with a fuel is air, water, oil, or the like.

As described above in detail, the embodiments each enable operation according to the charge/discharge command value and enable reduction in unnecessary operations of flow adjustment means, flow alignment means, or substance amount adjustment means, and enable smaller variation in pressure of pipe conduit through which a fluid flows and longer life of the flow adjustment means, flow alignment means, or substance amount adjustment means.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

## Claims

1. An electric power control device (100) applicable to a plant including a prime mover (2) configured to convert fluid energy into rotational energy or a fluid machine (2) configured to convert rotational energy into fluid energy, a rotary electrical machine (3) mechanically connected to the prime mover (2) and configured to convert rotational energy of the prime mover (2) into electrical energy or a rotary electrical machine (3) connected to the fluid machine (2) and configured to convert electrical energy into rotational energy, governing means (10) for adjusting an opening of flow adjustment means or flow alignment means of the prime mover (2), and power conversion means (8) for controlling electrical parameters of the rotary electrical machine (3) and controlling an effective power or rotation speed of the rotary electrical machine (3), the electric power control device (100) **characterized by** comprising:
effective power command value calculation means (21X) for receiving an output command value or input command value and a charge/discharge command value, and calculating a plurality of effective power command values using the received output command value or input command value and the received charge/discharge command value;
power conversion control command value calculation means (31) for calculating a power conversion control command value to be provided to the power conversion means (8), using one of the effective power command values calculated by the effective power command value calculation means (21X); and
governing control command value calculation means (41) for calculating a governing control command value to be provided to the governing means (10), using one of the effective power command values calculated by the effective power command value calculation means (21X) which differs from the effective power command value used for calculation of the power conversion control command value.

2. The electric power control device (100) according to claim 1, wherein
the power conversion means (8) comprises secondary current and/or secondary voltage control means for controlling secondary current and/or secondary voltage of the rotary electrical machine (3) and controlling a rotation speed or output of the rotary electrical machine (3), and
the power conversion control command value calculation means (31) comprises secondary current and/or secondary voltage command value calculation means for calculating a secondary current and/or secondary voltage command value to be provided to the secondary current and/or secondary voltage control means, using one of the effective power command values calculated by the effective power command value calculation means (21X).

3. The electric power control device (100) according to claim 1 or 2, wherein the effective power command value calculation means (21X) comprises:
first effective power command value calculation means (53) for calculating a first effective power command value using the output command value or input command value and the charge/discharge command value;
second effective power command value calculation means (54) for calculating a second effective power command value to be used in the power conversion control command value calculation means (31), using the first effective power command value and an effective power measurement value of the rotary electrical machine (3);
rotation speed command value calculation means (56) for calculating a rotation speed command value of the prime mover (2) using the second effective power command value calculated by the second effective power command value calculation means (54);
rotation speed deviation calculation means (58) for calculating a deviation between the rotation speed command value and a rotation speed measurement value of the rotary electrical machine (3);
third effective power command value calculation means (59) for calculating a third effective power command value to be used in the governing control command value calculation means (41), using the deviation; and
signal processing means (55 or 62) for reducing or removing high-frequency components not less than, or higher than, a predetermined frequency, from the first effective power command value calculated by the first effective power command value calculation means (53), or from the deviation calculated by the rotation speed deviation calculation means (58).

4. The electric power control device (100) according to claim 1 or 2, wherein the effective power command value calculation means (21X) comprises:
first effective power command value calculation means (53) for calculating a first effective power command value using the output command value or input command value and the charge/discharge command value;
second effective power command value calculation means (54) for calculating a second effective power command value to be used in the power conversion control command value calculation means (31), using the first effective power command value and an effective power measurement value of the rotary electrical machine (3);
rotation speed command value calculation means (56) for calculating a rotation speed command value of the prime mover (2) using the output command value or input command value and a head;
rotation speed deviation calculation means (58) for calculating a deviation between the rotation speed command value and a rotation speed measurement value of the rotary electrical machine (3); and
third effective power command value calculation means (59) for calculating a third effective power command value to be used in the governing control command value calculation means (41), using the deviation.

5. The electric power control device (100) according to claim 1 or 2, wherein the effective power command value calculation means (21X) comprises:
first effective power command value calculation means (53) for calculating a first effective power command value using the output command value or input command value and the charge/discharge command value;
second effective power command value calculation means (54) for calculating a second effective power command value to be used in the power conversion control command value calculation means (31), using the first effective power command value and an effective power measurement value of the rotary electrical machine (3);
rotation speed command value calculation means (56) for calculating a rotation speed command value of the prime mover (2) using the output command value or input command value and a head;
rotation speed deviation calculation means (58) for calculating a deviation between the rotation speed command value and a rotation speed measurement value of the rotary electrical machine (3);
third effective power command value calculation means (59) for calculating a third effective power command value to be used in the governing control command value calculation means (41), using the deviation calculated by the rotation speed deviation calculation means (58); and
signal processing means (62) for reducing or removing high-frequency components not less than, or higher than, a predetermined frequency, from the deviation calculated by the rotation speed deviation calculation means (58), or from the rotation speed measurement value of the rotary electrical machine (3).

6. The electric power control device (100) according to claim 1 or 2, wherein the effective power command value calculation means (21X) comprises:
first effective power command value calculation means (53) for calculating a first effective power command value using the output command value or input command value and the charge/discharge command value;
second effective power command value calculation means (54) for calculating a second effective power command value to be used in the power conversion control command value calculation means (31), using the first effective power command value and an effective power measurement value of the rotary electrical machine (3);
rotation speed command value calculation means (56) for calculating a rotation speed command value of the prime mover (2) using the output command value or input command value and a head;
rotation speed deviation calculation means (58) for calculating a deviation between the rotation speed command value and a rotation speed measurement value of the rotary electrical machine (3);
third effective power command value calculation means (59) for generating the third effective power command value using the output command value or input command value, correcting the third effective power command value using the deviation calculated by the rotation speed deviation calculation means (58), and outputting the corrected third effective power command value; and
signal processing means (62) for reducing or removing high-frequency components not less than, or higher than, a predetermined frequency, from the deviation calculated by the rotation speed deviation calculation means (58), or from the rotation speed measurement value of the rotary electrical machine (3).

7. The electric power control device (100) according to claim 1 or 2, wherein the effective power command value calculation means (21X) comprises:
first effective power command value calculation means (53) for calculating a first effective power command value using the output command value or input command value and the charge/discharge command value;
second effective power command value calculation means (54) for calculating a second effective power command value to be used in the power conversion control command value calculation means (31), using the first effective power command value and an effective power measurement value of the rotary electrical machine (3);
rotation speed command value calculation means (56) for calculating a rotation speed command value of the prime mover (2) using the output command value or input command value and a head;
rotation speed deviation calculation means (58) for calculating a deviation between the rotation speed command value and a rotation speed measurement value of the rotary electrical machine (3);
effective power command value correction means (64) for generating a signal obtained by reducing or removing low-frequency components not more than, or lower than, a predetermined frequency of the charge/discharge command value, the first effective power command value, the second effective power command value, the rotation speed deviation, or the rotation speed measurement value, and outputting the signal as an effective power command value correction signal; and
third effective power command value calculation means (59) for: generating a third effective power command value to be used in the governing control command value calculation means (41), using the output command value or input command value; correcting the third effective power command value using the effective power command value correction signal; and outputting the corrected third effective power command value.

8. The electric power control device (100) according to claim 1 or 2, wherein the effective power command value calculation means (21X) comprises:
first effective power command value calculation means (53) for calculating a first effective power command value using the output command value or input command value and the charge/discharge command value;
second effective power command value calculation means (54) for calculating a second effective power command value to be used in the power conversion control command value calculation means (31), using the first effective power command value and an effective power measurement value of the rotary electrical machine (3);
rotation speed command value calculation means (56) for calculating a rotation speed command value of the prime mover (2) using the output command value or input command value and a head;
rotation speed deviation correction means (65) for generating a signal obtained by reducing or removing low-frequency components not more than, or lower than, a predetermined frequency of the charge/discharge command value, the first effective power command value, the second effective power command value, or a rotation speed measurement value of the rotating electrical machine (3), and outputting the signal as a rotation speed deviation correction signal;
rotation speed deviation calculation means (58) for calculating a deviation between the rotation speed command value and the rotation speed measurement value of the rotary electrical machine (3), correcting the deviation using the rotation speed deviation correction signal, and outputting the corrected deviation; and
third effective power command value calculation means (59) for: generating a third effective power command value to be used in the governing control command value calculation means (41), using the output command value or input command value; correcting the third effective power command value using the corrected deviation; and outputting the corrected third effective power command value.

9. An electric power control method applicable to a plant including a prime mover (2) configured to convert fluid energy into rotational energy or a fluid machine (2) configured to convert rotational energy into fluid energy, a rotary electrical machine (3) mechanically connected to the prime mover (2) and configured to convert rotational energy of the prime mover (2) into electrical energy or a rotary electrical machine (3) connected to the fluid machine (2) and configured to convert electrical energy into rotational energy, governing means (10) for adjusting an opening of flow adjustment means or flow alignment means of the prime mover (2), and power conversion means (8) for controlling electrical parameters of the rotary electrical machine (3) and controlling an effective power or rotation speed of the rotary electrical machine (3), the method **characterized by** comprising:
an effective power command value calculation step (S1, S2) for receiving an output command value or input command value and a charge/discharge command value, and calculating a plurality of effective power command values using the received output command value or input command value and the received charge/discharge command value;
a power conversion control command value calculation step (S3, S4) for calculating a power conversion control command value to be provided to the power conversion means (8), using one of the effective power command values calculated in the effective power command value calculation step (S1, S2); and
a governing control command value calculation step (S5, S6) for calculating a governing control command value to be provided to the governing means (10), using one of the effective power command values calculated in the effective power command value calculation step (S1, S2) which differs from the effective power command value used for calculation of the power conversion control command value.

10. The electric power control method according to claim 9, wherein
the power conversion means (8) comprises secondary current and/or secondary voltage control means for controlling secondary current and/or secondary voltage of the rotary electrical machine (3) and controlling a rotation speed or output of the rotary electrical machine (3), and
the power conversion control command value calculation step (S3, S4) comprises a secondary current and/or secondary voltage command value calculation step (S3) for calculating a secondary current and/or secondary voltage command value to be provided to the secondary current and/or secondary voltage control means, using one of the effective power command values calculated in the effective power command value calculation step (S1, S2).

11. The electric power control method according to claim 9 or 10, wherein the effective power command value calculation step (S1, S2) comprises:
a first effective power command value calculation step (S11, S12) for calculating a first effective power command value using the output command value or input command value and the charge/discharge command value;
a second effective power command value calculation step (S21, S22) for calculating a second effective power command value to be used in the power conversion control command value calculation step (S3, S4), using the first effective power command value and an effective power measurement value of the rotary electrical machine (3);
a rotation speed command value calculation step (S33 or S33A) for calculating a rotation speed command value of the prime mover (2) using the first effective power command value;
a rotation speed deviation calculation step (S34) for calculating a deviation between the rotation speed command value and a rotation speed measurement value of the rotary electrical machine (3);
a third effective power command value calculation step (S35 or S35A) for calculating a third effective power command value to be used in the governing control command value calculation step (S5, S6), using the deviation; and
a signal processing step (S32 or S41) for reducing or removing high-frequency components not less than, or higher than, a predetermined frequency, from the first effective power command value, or from the deviation.

12. The electric power control method according to claim 9 or 10, wherein the effective power command value calculation step (S1, S2) comprises:
a first effective power command value calculation step (S11, S12) for calculating a first effective power command value using the output command value or input command value and the charge/discharge command value;
a second effective power command value calculation step (S21, S22) for calculating a second effective power command value to be used in the power conversion control command value calculation step (S3, S4), using the first effective power command value and an effective power measurement value of the rotary electrical machine (3);
a rotation speed command value calculation step (S33B) for calculating a rotation speed command value of the prime mover (2) using the output command value or input command value and a head;
a rotation speed deviation calculation step (S34) for calculating a deviation between the rotation speed command value and a rotation speed measurement value of the rotary electrical machine (3); and
a third effective power command value calculation step (S35) for calculating a third effective power command value to be used in the governing control command value calculation step (S5, S6), using the deviation.

13. The electric power control method according to claim 9 or 10, wherein the effective power command value calculation step (S1, S2) comprises:
a first effective power command value calculation step (S11, S12) for calculating a first effective power command value using the output command value or input command value and the charge/discharge command value;
a second effective power command value calculation step (S21, S22) for calculating a second effective power command value to be used in the power conversion control command value calculation step (S3, S4), using the first effective power command value and an effective power measurement value of the rotary electrical machine (3);
a rotation speed command value calculation step (S33B) for calculating a rotation speed command value of the prime mover (2) using the output command value or input command value and a head;
a rotation speed deviation calculation step (S34 or S34A) for calculating a deviation between the rotation speed command value and a rotation speed measurement value of the rotary electrical machine (3);
a third effective power command value calculation step (S35A) for calculating a third effective power command value to be used in the governing control command value calculation step (S5, S6), using the deviation; and
a signal processing step (S41 or S32B) for reducing or removing high-frequency components not less than, or higher than, a predetermined frequency, from the deviation, or from the first effective power command value.

14. The electric power control method according to claim 9 or 10, wherein the effective power command value calculation step (S1, S2) comprises:
a first effective power command value calculation step (S11, S12) for calculating a first effective power command value using the output command value or input command value and the charge/discharge command value;
a second effective power command value calculation step (S21, S22) for calculating a second effective power command value to be used in the power conversion control command value calculation step (S3, S4), using the first effective power command value and an effective power measurement value of the rotary electrical machine (3);
a rotation speed command value calculation step (S33B) for calculating a rotation speed command value of the prime mover (2) using the output command value or input command value and a head;
a rotation speed deviation calculation step (S34 or S34A) for calculating a deviation between the rotation speed command value and a rotation speed measurement value of the rotary electrical machine (3);
a third effective power command value calculation step (S35B or S35C) for generating the third effective power command value using the output command value or input command value, correcting the third effective power command value using the deviation, and outputting the corrected third effective power command value; and
a signal processing step (S41A or S32B) for reducing or removing high-frequency components not less than, or higher than, a predetermined frequency, from the deviation, or from the first effective power command value.

15. The electric power control method according to claim 9 or 10, wherein the effective power command value calculation step (S1, S2) comprises:
a first effective power command value calculation step (S11, S12) for calculating a first effective power command value using the output command value or input command value and the charge/discharge command value;
a second effective power command value calculation step (S21, S22) for calculating a second effective power command value to be used in the power conversion control command value calculation step (S3, S4), using the first effective power command value and an effective power measurement value of the rotary electrical machine (3);
a rotation speed command value calculation step (S33B) for calculating a rotation speed command value of the prime mover (2) using the output command value or input command value and a head;
a rotation speed deviation calculation step (S34) for calculating a deviation between the rotation speed command value and a rotation speed measurement value of the rotary electrical machine (3);
an effective power command value correction step (S41B, S41C, S41D, S41E, or S41F) for generating a signal obtained by reducing or removing low-frequency components not more than, or lower than, a predetermined frequency of the charge/discharge command value, the first effective power command value, the second effective power command value, the rotation speed deviation, or the rotation speed measurement value, and outputting the signal as an effective power command value correction signal; and
a third effective power command value calculation step (S35C) for: generating a third effective power command value to be used in the governing control command value calculation step (S5, S6), using the output command value or input command value; correcting the third effective power command value using the effective power command value correction signal; and outputting the corrected third effective power command value.

16. The electric power control method according to claim 9 or 10, wherein the effective power command value calculation step (S1, S2) comprises:
a first effective power command value calculation step (S11, S12) for calculating a first effective power command value using the output command value or input command value and the charge/discharge command value;
a second effective power command value calculation step (S21, S22) for calculating a second effective power command value to be used in the power conversion control command value calculation step (S3, S4), using the first effective power command value and an effective power measurement value of the rotary electrical machine (3);
a rotation speed deviation correction step (S41G, S41H, S41I, or S41J) for generating a signal obtained by reducing or removing low-frequency components not more than, or lower than, a predetermined frequency of the charge/discharge command value, the first effective power command value, the second effective power command value, or a rotation speed measurement value of the rotating electrical machine (3), and outputting the signal as a rotation speed deviation correction signal;
a rotation speed command value calculation step (S33B) for calculating a rotation speed command value of the prime mover (2) using the output command value or input command value and a head;
a rotation speed deviation calculation step (S34A) for calculating a deviation between the rotation speed command value and the rotation speed measurement value of the rotary electrical machine (3), correcting the deviation using the rotation speed deviation correction signal, and outputting the corrected deviation; and
a third effective power command value calculation step (S35D) for: generating a third effective power command value to be used in the governing control command value calculation step (S5, S6), using the output command value or input command value; correcting the third effective power command value using the corrected deviation; and outputting the corrected third effective power command value.

17. An electric power control device (100) applicable to a plant including a prime mover (2) configured to convert substance energy into rotational energy, a rotary electrical machine (3) mechanically connected to the prime mover (2) and configured to convert rotational energy of the prime mover (2) into electrical energy, substance amount adjustment means for adjusting a substance amount of the prime mover (2), and power conversion means (8) for controlling electrical parameters of the rotary electrical machine (3) and controlling an effective power or rotation speed of the rotary electrical machine (3), the electric power control device (100) **characterized by** comprising:
effective power command value calculation means (21X) for receiving an output command value or input command value and a charge/discharge command value, and calculating a plurality of effective power command values using the received output command value or input command value and the received charge/discharge command value;
power conversion control command value calculation means (31) for calculating a power conversion control command value to be provided to the power conversion means (8), using one of the effective power command values calculated by the effective power command value calculation means (21X); and
governing control command value calculation means (41) for calculating a governing control command value to be provided to the substance amount adjustment means, using one of the effective power command values calculated by the effective power command value calculation means (21X) which differs from the effective power command value used for calculation of the power conversion control command value.

18. A electric power control method applicable to a plant including a prime mover (2) configured to convert substance energy into rotational energy, a rotary electrical machine (3) mechanically connected to the prime mover (2) and configured to convert rotational energy of the prime mover (2) into electrical energy, substance amount adjustment means for adjusting a substance amount of the prime mover (2), and power conversion means (8) for controlling electrical parameters of the rotary electrical machine (3) and controlling an effective power or rotation speed of the rotary electrical machine (3), the method **characterized by** comprising:
an effective power command value calculation step (S1, S2) for receiving an output command value or input command value and a charge/discharge command value, and calculating a plurality of effective power command values using the received output command value or input command value and the received charge/discharge command value;
a power conversion control command value calculation step (S3, S4) for calculating a power conversion control command value to be provided to the power conversion means (8), using one of the effective power command values calculated in the effective power command value calculation step (S1, S2); and
a governing control command value calculation step (S5, S6) for calculating a governing control command value to be provided to the substance amount adjustment means, using one of the effective power command values calculated in the effective power command value calculation step (S1, S2) which differs from the effective power command value used for calculation of the power conversion control command value.
